# EUROPEAN PATENT APPLICATION

(11) **EP 4 234 992 A2**
(43) Date of publication of application: **30.08.2023**
(21) Application number: 23176630.4
(22) Date of filing: 18.09.2019
(51) Int. Cl.: F16K 1/38

(54) **REFRIGERATION CYCLE DEVICE**

(30) Priority: 17.06.2019 WO PCT/JP2019/023858
(62) Divisional of application: 19933878.1
(71) Applicant: Mitsubishi Electric Corporation, Chiyoda-ku Tokyo 100-8310 (JP)
(72) Inventor: TASHIRO, Yusuke, Tokyo 1008310 (JP); HAYAMARU, Yasuhide, Tokyo 1008310 (JP); SATO, Masakazu, Tokyo 1008310 (JP); KONDO, Masakazu, Tokyo 1008310 (JP); KAWASHIMA, Atsushi, Tokyo 1008310 (JP)
(74) Representative: Pfenning, Meinig & Partner mbB

(57) **Abstract**

A refrigeration cycle apparatus includes a first flow switch valve including first to fourth ports, a second flow switch valve and a third flow switch valve each including fifth to seventh ports, a compressor, a discharge pipe connecting a discharge port of the compressor and the first port, a first high pressure pipe connecting between the discharge pipe and the fifth ports, a bypass expansion valve provided at a part of the first high pressure pipe, the part extending, a first outdoor heat exchanger connected to the seventh port of the second flow switch valve, a second outdoor heat exchanger connected to the seventh port of the third flow switch valve, and a controller. The controller is configured to perform a differential pressure ensuring process, when switching the second flow switch valve or the third flow switch valve. In the differential pressure ensuring process, the controller is configured to set operation frequency of the compressor to a first frequency and set opening degree of the bypass expansion valve to a first degree if a first condition is not met, and set the operation frequency of the compressor to a second frequency which is higher than the first frequency or set the opening degree of the bypass expansion valve to a second degree which is larger than the first degree if the first condition is met.

## Description

### Technical Field

The present disclosure relates to a refrigeration cycle apparatus capable of performing a heating operation, a defrosting operation, and a simultaneous heating-defrosting operation.

### Background Art

An air-conditioning apparatus is disclosed in Fig. 1 of Patent Literature 1. This air-conditioning apparatus includes an outdoor heat exchanger including a first heat exchanger and a second heat exchanger. In this air-conditioning apparatus, the outdoor heat exchanger can be defrosted without stopping heating by defrosting the first heat exchanger and the second heat exchanger alternately. This air-conditioning apparatus is provided with two flow switch valves to enable high-temperature high-pressure refrigerant from a compressor to flow to the first heat exchanger and the second heat exchanger. The flow switch valves are constituted by three-way valves using four-way valves.

### Citation List

### Patent Literature

Patent Literature 1: WO 2017/094148

### Summary of Invention

### Technical Problem

In general, a valve operated by differential pressure is used as a flow switch valve in an air-conditioning apparatus. A valve operated by differential pressure has, for example, a high pressure port connected to a discharge side of a compressor and a low pressure port connected to a suction side of the compressor and operates using the difference in pressure between high pressure and low pressure. For a valve operated by differential pressure, a minimum operating differential pressure for assuredly operating the valve is defined. In a case where the difference in pressure between high pressure and low pressure becomes less than or equal to the minimum operating differential pressure, the valve does not normally operate and does not perform flow path switching.

The present disclosure has been made to solve problems as described above, and an object of the present disclosure is to provide a refrigeration cycle apparatus that enables a flow switch valve operated by differential pressure to normally operate in a refrigerant circuit that can perform a heating operation, a defrosting operation, and a simultaneous heating-defrosting operation.

### Solution to Problem

A refrigeration cycle apparatus according to an embodiment of the present disclosure includes a first flow switch valve including a first port, a second port, a third port, and a fourth port, a second flow switch valve and a third flow switch valve each including a fifth port, a sixth port, and a seventh port, the second flow switch valve and the third flow switch valve operating by differential pressure, a compressor including a suction port for sucking refrigerant and a discharge port for discharging the refrigerant, a discharge pipe connecting between the discharge port and the first port, a suction pipe connecting between the suction port and the second port, a first high pressure pipe connecting between the discharge pipe and the fifth port of the second flow switch valve and the fifth port of the third flow switch valve, a second high pressure pipe connecting the third port and a bifurcation arranged at the first high pressure pipe, a bypass expansion valve provided at a part of the first high pressure pipe, the part extending between the discharge pipe and the bifurcation, a valve provided at the second high pressure pipe, a low pressure pipe connecting between the suction pipe and the sixth port of the second flow switch valve and the sixth port of the third flow switch valve, a first outdoor heat exchanger connected to the seventh port of the second flow switch valve, a second outdoor heat exchanger connected to the seventh port of the third flow switch valve, an indoor heat exchanger connected to the fourth port, and a controller configured to control operation frequency of the compressor and opening degree of the bypass expansion valve. The controller is configured to perform a differential pressure ensuring process, when switching the second flow switch valve or the third flow switch valve. In the differential pressure ensuring process, the controller is configured to set the operation frequency of the compressor to a first frequency and set the opening degree of the bypass expansion valve to a first degree if a first condition is not met, and set the operation frequency of the compressor to a second frequency which is higher than the first frequency or set the opening degree of the bypass expansion valve to a second degree which is larger than the first degree if the first condition is met.

A refrigeration cycle apparatus according to an embodiment of the present disclosure includes a first flow switch valve including a first port, a second port, a third port, and a fourth port, a second flow switch valve and a third flow switch valve each including a fifth port, a sixth port, and a seventh port, the second flow switch valve and the third flow switch valve operating by differential pressure, a compressor including a suction port for sucking refrigerant and a discharge port for discharging the refrigerant, a discharge pipe connecting between the discharge port and the first port, a suction pipe connecting between the suction port and the second port, a first high pressure pipe connecting between the discharge pipe and the fifth port of the second flow switch valve and the fifth port of the third flow switch valve, a second high pressure pipe connecting the third port and a bifurcation arranged at the first high pressure pipe, a bypass expansion valve provided at a part of the first high pressure pipe, the part extending between the discharge pipe and the bifurcation, a valve provided at the second high pressure pipe, a low pressure pipe connecting between the suction pipe and the sixth port of the second flow switch valve and the sixth port of the third flow switch valve, a first outdoor heat exchanger connected to the seventh port of the second flow switch valve, a second outdoor heat exchanger connected to the seventh port of the third flow switch valve, and an indoor heat exchanger connected to the fourth port. The bypass expansion valve has a flow path allowing the refrigerant to flow therethrough even in a case where the bypass expansion valve is in a closed state.

### Advantageous Effects of Invention

According to an embodiment of the present disclosure, the minimum operating differential pressures of the second flow switch valve and the third flow switch valve, which are operated by differential pressure, can be ensured by performing the differential pressure ensuring process when switching of the second flow switch valve or the third flow switch valve is performed. Consequently, the second flow switch valve and the third flow switch valve can be normally operated in any environment.

### Brief Description of Drawings

[Fig. 1] Fig. 1 is a refrigerant circuit diagram illustrating the configuration of a refrigeration cycle apparatus according to Embodiment 1.
[Fig. 2] Fig. 2 is a functional block diagram of a controller according to Embodiment 1.
[Fig. 3] Fig. 3 is a cross-sectional view illustrating a schematic configuration of a four-way valve of the refrigeration cycle apparatus according to Embodiment 1.
[Fig. 4] Fig. 4 is a diagram illustrating the operation of the refrigeration cycle apparatus according to Embodiment 1 at the time of a heating operation.
[Fig. 5] Fig. 5 is a diagram illustrating the operation of the refrigeration cycle apparatus according to Embodiment 1 at the time of a defrosting operation.
[Fig. 6] Fig. 6 is a diagram illustrating the operation of the refrigeration cycle apparatus according to Embodiment 1 at the time of a first operation during a simultaneous heating-defrosting operation.
[Fig. 7] Fig. 7 is a diagram illustrating the operation of the refrigeration cycle apparatus according to Embodiment 1 at the time of a second operation during the simultaneous heating-defrosting operation.
[Fig. 8] Fig. 8 is a flow chart illustrating the procedure of the operation of the refrigeration cycle apparatus according to Embodiment 1.
[Fig. 9] Fig. 9 is a table illustrating an example of a relationship between pressure at a second flow switch valve and outdoor air temperature in Embodiment 1.
[Fig. 10] Fig. 10 is a table illustrating an example of a relationship between pressure at the second flow switch valve and operation frequency of a compressor in Embodiment 1.
[Fig. 11] Fig. 11 is a flow chart illustrating the procedure of a differential pressure ensuring process of Embodiment 1.
[Fig. 12] Fig. 12 is a table illustrating an example of a relationship between pressure at a second flow switch valve and outdoor air temperature in Embodiment 2.
[Fig. 13] Fig. 13 is a table illustrating an example of a relationship between pressure at the second flow switch valve and operation frequency of a compressor in Embodiment 2.
[Fig. 14] Fig. 14 is a flow chart illustrating the procedure of a simultaneous heating-defrosting operation of Embodiment 2.
[Fig. 15] Fig. 15 is a schematic configuration diagram of a bypass expansion valve of a refrigeration cycle apparatus according to Embodiment 3.
[Fig. 16] Fig. 16 is a plan view of a base of the bypass expansion valve according to Embodiment 3.
[Fig. 17] Fig. 17 is a cross-sectional view of a restriction portion of the bypass expansion valve according to Embodiment 3.
[Fig. 18] Fig. 18 is a cross-sectional view of the restriction portion in a case where the bypass expansion valve according to Embodiment 3 is in a closed state.
[Fig. 19] Fig. 19 is a cross-sectional view of a restriction portion of a bypass expansion valve according to a modification of Embodiment 3.
[Fig. 20] Fig. 20 is a cross-sectional view of a restriction portion of a bypass expansion valve according to another modification of Embodiment 3.
[Fig. 21] Fig. 21 is a graph illustrating a relationship between opening degree and Cv value at the bypass expansion valve.

### Description of Embodiments

### Embodiment 1.

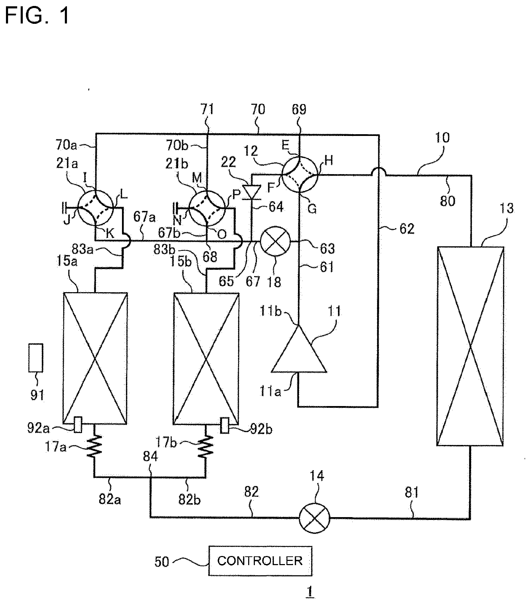

A refrigeration cycle apparatus 1 according to Embodiment 1 will be described. Fig. 1 is a refrigerant circuit diagram illustrating the configuration of the refrigeration cycle apparatus 1 according to Embodiment 1. In Embodiment 1, an air-conditioning apparatus is illustrated by example as the refrigeration cycle apparatus 1. As illustrated in Fig. 1, the refrigeration cycle apparatus 1 according to Embodiment 1 includes a refrigerant circuit 10 and a controller 50, which controls the refrigerant circuit 10. The refrigerant circuit 10 according to Embodiment 1 includes a compressor 11, a first flow switch valve 12, an indoor heat exchanger 13, an expansion valve 14, a first outdoor heat exchanger 15a, a second outdoor heat exchanger 15b, a second flow switch valve 21a, and a third flow switch valve 21b. As will be described later, the refrigerant circuit 10 is configured to be able to perform at least a heating operation, a reverse cycle defrosting operation (hereinafter simply referred to as "defrosting operation"), and a simultaneous heating-defrosting operation. The refrigerant circuit 10 may also be configured to be able to perform a cooling operation. At the time of the cooling operation, the first flow switch valve 12, the second flow switch valve 21a, and the third flow switch valve 21b are set to be in a state that is substantially the same as that for the defrosting operation.

The refrigeration cycle apparatus 1 includes an outdoor unit installed in an outdoor space and an indoor unit installed in an indoor space. The outdoor unit includes the compressor 11, the first flow switch valve 12, the expansion valve 14, the first outdoor heat exchanger 15a, the second outdoor heat exchanger 15b, the second flow switch valve 21a, and the third flow switch valve 21b. The indoor unit includes the indoor heat exchanger 13.

The compressor 11 is a fluid machine that sucks and compresses low-pressure gas refrigerant to discharge high-pressure gas refrigerant. An inverter-driven compressor capable of adjusting operation frequency is used as the compressor 11. An operation frequency range is preset in the compressor 11. The compressor 11 is configured to operate under control performed by the controller 50 at an operation frequency that can be changed within the operation frequency range. The compressor 11 includes a suction port 11a for sucking refrigerant and a discharge port 11b for discharging compressed refrigerant. The suction port 11a is maintained at suction pressure, namely, low pressure. The discharge port 11b is maintained at discharge pressure, namely, high pressure.

The first flow switch valve 12 is a four-way valve and has four ports E, F, G, and H. In the following description, the port G, the port E, the port F, and the port H may also be referred to as "first port G", "second port E", "third port F", and "fourth port H", respectively. The first port G is a high pressure port whose pressure is maintained at high pressure in any of the heating operation, the defrosting operation, and the simultaneous heating-defrosting operation. The second port E is a low pressure port whose pressure is maintained at low pressure in any of the heating operation, the defrosting operation, and the simultaneous heating-defrosting operation. The first flow switch valve 12 can be in a first state indicated by a solid line in Fig. 1 and a second state indicated by a broken line in Fig. 1. In the first state, the first port G communicates with the fourth port H, and the second port E communicates with the third port F. In the second state, the first port G communicates with the third port F, and the second port E communicates with the fourth port H. The first flow switch valve 12 is set to be in the first state at the time of the heating operation and at the time of the simultaneous heating-defrosting operation and to be in the second state at the time of the defrosting operation under control performed by the controller 50.

The indoor heat exchanger 13 is a heat exchanger that exchanges heat between refrigerant flowing thereinside and air sent by an indoor fan (not illustrated) included in the indoor unit. The indoor heat exchanger 13 serves as a condenser at the time of the heating operation and as an evaporator at the time of the cooling operation.

The expansion valve 14 is a valve that reduces the pressure of refrigerant. As the expansion valve 14, an electronic expansion valve is used that can change the opening degree thereof under control performed by the controller 50.

The first outdoor heat exchanger 15a and the second outdoor heat exchanger 15b are each a heat exchanger that exchanges heat flowing thereinside and air sent by an outdoor fan (not illustrated) included in the outdoor unit. The first outdoor heat exchanger 15a and the second outdoor heat exchanger 15b serve as an evaporator at the time of the heating operation and as a condenser at the time of the cooling operation. The first outdoor heat exchanger 15a and the second outdoor heat exchanger 15b are connected in parallel with each other in the refrigerant circuit 10. The first outdoor heat exchanger 15a and the second outdoor heat exchanger 15b are configured by, for example, dividing one heat exchanger into two portions, which are upper and lower portions. For example, the first outdoor heat exchanger 15a is arranged under the second outdoor heat exchanger 15b. In this case, the first outdoor heat exchanger 15a and the second outdoor heat exchanger 15b are also arranged in parallel with each other with respect to airflow.

The second flow switch valve 21a is a four-way valve and has four ports I, J, K, and L. In the following description, the port K, the port I, the port L, and the port J may also be referred to as "fifth port K", "sixth port I", "seventh port L", and "eighth port J", respectively. The fifth port K is a high pressure port whose pressure is maintained at high pressure in any of the heating operation, the defrosting operation, and the simultaneous heating-defrosting operation. The sixth port I is a low pressure port whose pressure is maintained at low pressure in any of the heating operation, the defrosting operation, and the simultaneous heating-defrosting operation. The eighth port J is closed such that refrigerant does not leak from the eighth port J. The second flow switch valve 21a can be in a first state indicated by a solid line in Fig. 1 and a second state indicated by a broken line in Fig. 1. In the first state, the fifth port K communicates with the eighth port J, and the sixth port I communicates with the seventh port L. In the second state, the fifth port K communicates with the seventh port L, and the sixth port I communicates with the eighth port J. The second flow switch valve 21a is set to be in the first state at the time of the heating operation, to be in the second state at the time of the defrosting operation, and to be in the first state or the second state at the time of the simultaneous heating-defrosting operation under control performed by the controller 50.

The third flow switch valve 21b is a four-way valve and has four ports M, N, O, and P. In the following description, the port O, the port M, the port P, and the port N may also be referred to as "fifth port O", "sixth port M", "seventh port P", and "eighth port N", respectively. The fifth port O is a high pressure port whose pressure is maintained at high pressure in any of the heating operation, the defrosting operation, and the simultaneous heating-defrosting operation. The sixth port M is a low pressure port whose pressure is maintained at low pressure in any of the heating operation, the defrosting operation, and the simultaneous heating-defrosting operation. The eighth port N is closed such that refrigerant does not leak from the eighth port N. The third flow switch valve 21b can be in a first state indicated by a solid line in Fig. 1 and a second state indicated by a broken line in Fig. 1. In the first state, the fifth port O communicates with the eighth port N, and the sixth port M communicates with the seventh port P. In the second state, the fifth port O communicates with the seventh port P, and the sixth port M communicates with the eighth port N. The third flow switch valve 21b is set to be in the first state at the time of the heating operation, to be in the second state at the time of the defrosting operation, and to be in the first state or the second state at the time of the simultaneous heating-defrosting operation under control performed by the controller 50.

The first flow switch valve 12, the second flow switch valve 21a, and the third flow switch valve 21b are each a four-way valve operated by differential pressure, the four-way valve operating using the difference in pressure between discharge-side pressure and suction-side pressure of the compressor 11. As the first flow switch valve 12, the second flow switch valve 21a, and the third flow switch valve 21b, four-way valves having the same configuration can be used.

The discharge port 11b of the compressor 11 and the first port G of the first flow switch valve 12 are connected by a discharge pipe 61. High-pressure refrigerant discharged from the discharge port 11b of the compressor 11 flows through the discharge pipe 61 in any of the heating operation, the defrosting operation, and the simultaneous heating-defrosting operation. The suction port 11a of the compressor 11 and the second port E of the first flow switch valve 12 are connected by a suction pipe 62. Low-pressure refrigerant to be sucked into the suction port 11a of the compressor 11 flows through the suction pipe 62 in any of the heating operation, the defrosting operation, and the simultaneous heating-defrosting operation.

One end of a first high pressure pipe 67 is connected to a bifurcation 63 arranged partway along the discharge pipe 61. The other end of the first high pressure pipe 67 divides at a bifurcation 68 into a first high pressure pipe 67a and a first high pressure pipe 67b. The first high pressure pipe 67a is connected to the fifth port K, which is a high pressure port, of the second flow switch valve 21a. The first high pressure pipe 67b is connected to the fifth port O, which is a high pressure port, of the third flow switch valve 21b.

The first high pressure pipe 67 has another bifurcation 65 arranged between the bifurcation 63 and the bifurcation 68. The bifurcation 65 of the first high pressure pipe 67 and the third port F of the first flow switch valve 12 are connected by a second high pressure pipe 64.

The first high pressure pipe 67 has a bypass expansion valve 18 provided between the bifurcation 63 and the bifurcation 65. The bypass expansion valve 18 is an electronic expansion valve whose opening degree is controlled under control performed by the controller 50. The bypass expansion valve 18 also has the function of reducing the pressure of refrigerant. The operation of the bypass expansion valve 18 will be described later.

The second high pressure pipe 64 has a check valve 22. The check valve 22 is configured to allow refrigerant to flow in the direction from the third port F of the first flow switch valve 12 toward the first high pressure pipe 67 and prevent refrigerant from flowing in the direction from the first high pressure pipe 67 toward the third port F. Instead of the check valve 22, an on-off valve such as a solenoid valve or a motor operated valve that opens and closes under control performed by the controller 50 can be used. An operation performed in a case where an on-off valve is used instead of the check valve 22 will be described later.

One end of a low pressure pipe 70 is connected to a bifurcation 69 arranged partway along the suction pipe 62. The other end of the low pressure pipe 70 divides at a bifurcation 71 into a low pressure pipe 70a and a low pressure pipe 70b. The low pressure pipe 70a is connected to the sixth port I, which is a low pressure port, of the second flow switch valve 21a. The low pressure pipe 70b is connected to the sixth port M, which is a low pressure port, of the third flow switch valve 21b.

The fourth port H of the first flow switch valve 12 is connected to one inlet-outlet of the indoor heat exchanger 13 with a refrigerant pipe 80 interposed therebetween. A portion of the refrigerant pipe 80 is constituted by an extension pipe connecting the outdoor unit and the indoor unit. The refrigerant pipe 80 has a stop valve, which is not illustrated, at a position between the extension pipe and the outdoor unit.

The other inlet-outlet of the indoor heat exchanger 13 is connected to one inlet-outlet of the expansion valve 14 with a refrigerant pipe 81 interposed therebetween. A portion of the refrigerant pipe 81 is constituted by an extension pipe connecting the outdoor unit and the indoor unit. The refrigerant pipe 81 has a stop valve, which is not illustrated, at a position between the extension pipe and the outdoor unit.

One end of a refrigerant pipe 82 is connected to the other inlet-outlet of the expansion valve 14. The other end of the refrigerant pipe 82 divides at a bifurcation 84 into a refrigerant pipe 82a and a refrigerant pipe 82b. The refrigerant pipe 82a has a pressure reducing device such as a capillary tube 17a. The refrigerant pipe 82a is connected to one inlet-outlet of the first outdoor heat exchanger 15a. The refrigerant pipe 82b has a pressure reducing device such as a capillary tube 17b. The refrigerant pipe 82b is connected to one inlet-outlet of the second outdoor heat exchanger 15b. That is, the other inlet-outlet of the expansion valve 14 is connected to the one inlet-outlet of the first outdoor heat exchanger 15a and the one inlet-outlet of the second outdoor heat exchanger 15b with the refrigerant pipe 82 interposed therebetween. The one inlet-outlet of the first outdoor heat exchanger 15a is connected to the one inlet-outlet of the second outdoor heat exchanger 15b with the refrigerant pipe 82a and the refrigerant pipe 82b interposed therebetween.

The other inlet-outlet of the first outdoor heat exchanger 15a is connected to the seventh port L of the second flow switch valve 21a with a refrigerant pipe 83a interposed therebetween. The other inlet-outlet of the second outdoor heat exchanger 15b is connected to the seventh port P of the third flow switch valve 21b with a refrigerant pipe 83b interposed therebetween. At least at the time of the heating operation and at the time of the defrosting operation, the first outdoor heat exchanger 15a and the second outdoor heat exchanger 15b are connected in parallel with each other in the refrigerant circuit 10.

The casing of the outdoor unit is provided with an outdoor air temperature sensor 91, which is configured to detect the temperature of outside air around the outdoor unit. In a case where the outdoor unit is installed indoors, the temperature of outside air means the ambient temperature around the outdoor unit. The first outdoor heat exchanger 15a is provided with a heat exchanger temperature sensor 92a, which is configured to detect the temperature of the first outdoor heat exchanger 15a. The second outdoor heat exchanger 15b is provided with a heat exchanger temperature sensor 92b, which is configured to detect the temperature of the second outdoor heat exchanger 15b. The outdoor air temperature sensor 91, the heat exchanger temperature sensor 92a, and the heat exchanger temperature sensor 92b are, for example, thermistors. Detection results from the outdoor air temperature sensor 91, the heat exchanger temperature sensor 92a, and the heat exchanger temperature sensor 92b are transmitted to the controller 50 and are used by the controller 50 to perform control. The refrigerant circuit 10 may include a temperature sensor or a pressure sensor other than the sensors described above.

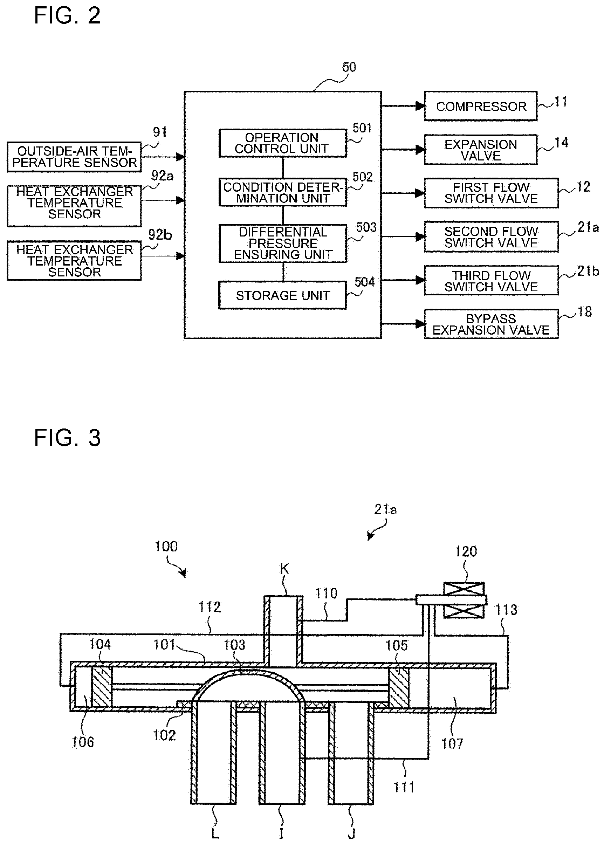

The controller 50 includes a microcomputer including, for example, a central processing unit (CPU), a read-only memory (ROM), a random access memory (RAM), and an input/output (I/O) port. Fig. 2 is a functional block diagram of the controller 50 according to Embodiment 1. As illustrated in Fig. 2, the controller 50 receives detection results from the outdoor air temperature sensor 91, the heat exchanger temperature sensor 92a, and the heat exchanger temperature sensor 92b. The controller 50 may also receive a detection signal from the other temperature sensor and the other pressure sensor provided in the refrigerant circuit 10 and an operation signal from an operation unit that receives an operation performed by the user.

The controller 50 includes an operation control unit 501, a condition determination unit 502, and a differential pressure ensuring unit 503 as functional units realized by executing programs. The controller 50 further includes a storage unit 504 including a memory such as a ROM or a RAM. The operation control unit 501 control the operation of the entire refrigeration cycle apparatus 1 on the basis of input signals and performs the heating operation, the defrosting operation, and the simultaneous heating-defrosting operation. Specifically, the operation control unit 501 controls the operation frequency of the compressor 11, the opening degree of the expansion valve 14, switching of the first flow switch valve 12, switching of the second flow switch valve 21a, and switching of the third flow switch valve 21b, the opening degree of the bypass expansion valve 18, and a fan.

The condition determination unit 502 determines whether a first condition is met on the basis of detection results from the outdoor air temperature sensor 91, the heat exchanger temperature sensor 92a, and the heat exchanger temperature sensor 92b when switching of the second flow switch valve 21a and switching of the third flow switch valve 21b are performed. In a case where the condition determination unit 502 determines that the first condition is met, the differential pressure ensuring unit 503 controls the opening degree of the bypass expansion valve 18 to ensure a certain difference in pressure. The condition determination unit 502 and the differential pressure ensuring unit 503 will be described in detail below. The storage unit 504 stores various types of data and programs used in processing performed by the operation control unit 501, the condition determination unit 502, and the differential pressure ensuring unit 503.

Fig. 3 is a cross-sectional view illustrating a schematic configuration of the second flow switch valve 21a of the refrigeration cycle apparatus 1 according to Embodiment 1. As illustrated in Fig. 3, the second flow switch valve 21a includes a valve body 100 and a pilot solenoid valve 120. The second flow switch valve 21a is a four-way valve operated by differential pressure.

The valve body 100 includes a cylinder 101, a slide base 102 formed on a portion of the inner wall of the cylinder 101, and a slide valve 103 that slides on the slide base 102 along the central axis direction of the cylinder 101. The central part of the slide base 102 in the central axis direction of the cylinder 101 is provided with the sixth port I, which is a low pressure port. The seventh port L and the eighth port J are provided on both sides of the sixth port I such that the seventh port L and the eighth port J sandwich the sixth port I in the central axis direction of the cylinder 101. The fifth port K, which is a high pressure port, is provided at a position facing the sixth port I across the central axis of the cylinder 101.

The slide valve 103 has a dome shape that is open toward the slide base 102. On one end side of the slide valve 103 in the central axis direction of the cylinder 101, a piston 104 coupled to the slide valve 103 is provided. A first space 106 is formed between one end of the cylinder 101 and the piston 104. On the other end side of the slide valve 103 in the central axis direction of the cylinder 101, a piston 105 coupled to the slide valve 103 is provided. A second space 107 is formed between the other end of the cylinder 101 and the piston 105. The pistons 104 and 105 are provided such that the pistons 104 and 105 are slidable along the inner wall surface of the cylinder 101. The pistons 104 and 105 move together with the slide valve 103 along the central axis direction of the cylinder 101.

The pilot solenoid valve 120 is connected to the valve body 100 with four individual pilot tubes 110, 111, 112, and 113 interposed therebetween. The pilot tube 110 is connected to the fifth port K of the valve body 100. The pilot tube 111 is connected to the sixth port I of the valve body 100. The pilot tube 112 is connected to the first space 106 of the valve body 100. The pilot tube 113 is connected to the second space 107 of the valve body 100.

The pilot solenoid valve 120 is switched between a first state and a second state under control performed by the controller 50. In the first state, the pilot tube 110 communicates with the pilot tube 113 in the inside of the pilot solenoid valve 120, and the pilot tube 111 communicates with the pilot tube 112 in the inside of the pilot solenoid valve 120. Thus, in the first state, the fifth port K communicates with the second space 107 so that the pressure in the second space 107 becomes high, and the sixth port I communicates with the first space 106 so that the pressure in the first space 106 becomes low. The slide valve 103 moves toward the first space 106 side due to the difference in pressure between the first space 106 and the second space 107 and enters the state illustrated in Fig. 3. As a result, the sixth port I communicates with the seventh port L, and the fifth port K communicates with the eighth port J.

In the second state, the pilot tube 110 communicates with the pilot tube 112 in the inside of the pilot solenoid valve 120, and the pilot tube 111 communicates with the pilot tube 113 in the inside of the pilot solenoid valve 120. Thus, in the second state, the fifth port K communicates with the first space 106 so that the pressure in the first space 106 becomes high, and the sixth port I communicates with the second space 107 so that the pressure in the second space 107 becomes low. The slide valve 103 moves toward the second space 107 side due to the difference in pressure between the first space 106 and the second space 107. As a result, the sixth port I communicates with the eighth port J, and the fifth port K communicates with the seventh port L.

In any of the first state and the second state, the pressure of the fifth port K is higher than that of the sixth port I, and thus the slide valve 103 is pressed against the slide base 102 due to the difference in pressure. As a result, the leakage of refrigerant from the slide valve 103 is suppressed.

Although not illustrated and not described, the third flow switch valve 21b and the first flow switch valve 12 each have substantially the same configuration as that of the second flow switch valve 21a.

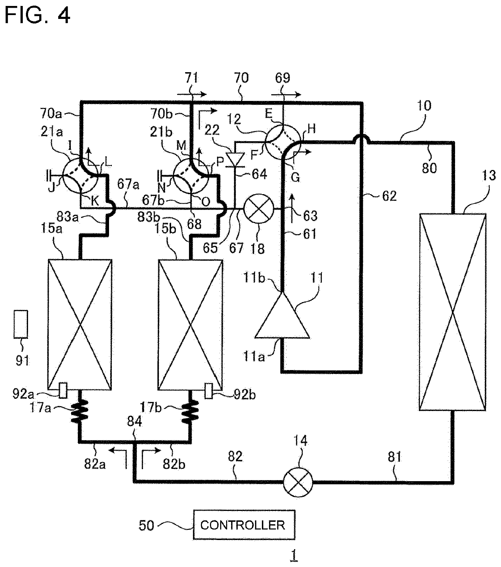

Next, the operation of the refrigeration cycle apparatus 1 at the time of the heating operation will be described. Fig. 4 is a diagram illustrating the operation of the refrigeration cycle apparatus 1 according to Embodiment 1 at the time of the heating operation. As illustrated in Fig. 4, at the time of the heating operation, the first flow switch valve 12 is set to be in the first state, in which the first port G communicates with the fourth port H, and the second port E communicates with the third port F. The second flow switch valve 21a is set to be in the first state, in which the fifth port K communicates with the eighth port J, and the sixth port I communicates with the seventh port L. The third flow switch valve 21b is set to be in the first state, in which the fifth port O communicates with the eighth port N, and the sixth port M communicates with the seventh port P.

The bypass expansion valve 18 is set to be in an open state. In this case, the opening degree of the bypass expansion valve 18 is set to "fully open". By setting the bypass expansion valve 18 to be in the open state, the pressure of the fifth port K of the second flow switch valve 21a and that of the fifth port O of the third flow switch valve 21b are maintained at high pressure or intermediate pressure. In this case, the intermediate pressure is pressure higher than the suction pressure of the compressor 11 and lower than the discharge pressure of the compressor 11. In a case where the bypass expansion valve 18 is set to be in the open state, an end side of the first high pressure pipe 67 is closed by the eighth port J of the second flow switch valve 21a and the eighth port N of the third flow switch valve 21b. Thus, refrigerant does not flow out from the other ports of the second flow switch valve 21a and the third flow switch valve 21b. The bypass expansion valve 18 may be set to be in a closed state. The pressure of the sixth port I of the second flow switch valve 21a and that of the sixth port M of the third flow switch valve 21b are maintained at low pressure. Thus, even when the bypass expansion valve 18 is set to be in the closed state, the pressure of the fifth port K of the second flow switch valve 21a is maintained at a higher pressure than that of the sixth port I, and the pressure of the fifth port O of the third flow switch valve 21b is maintained at a higher pressure than that of the sixth port M.

The flow of refrigerant in the direction from the first high pressure pipe 67 toward the third port F of the first flow switch valve 12 is blocked by the check valve 22. In a case where an on-off valve is used instead of the check valve 22, the on-off valve is set to be in a closed state. As a result, the flow of refrigerant in the direction from the first high pressure pipe 67 toward the third port F of the first flow switch valve 12 is blocked by the on-off valve.

High-pressure gas refrigerant discharged from the compressor 11 flows into the indoor heat exchanger 13 via the discharge pipe 61, the first flow switch valve 12, and the refrigerant pipe 80. The indoor heat exchanger 13 serves as a condenser at the time of the heating operation. That is, in the indoor heat exchanger 13, heat is exchanged between refrigerant flowing inside the indoor heat exchanger 13 and indoor air sent by the indoor fan, and the heat of condensation of the refrigerant is transferred to the indoor air. As a result, the gas refrigerant that has flowed into the indoor heat exchanger 13 condenses to high-pressure liquid refrigerant. The indoor air sent by the indoor fan is heated by heat transferred from the refrigerant.

Liquid refrigerant that has flowed out from the indoor heat exchanger 13 flows into the expansion valve 14 via the refrigerant pipe 81. Liquid refrigerant that has flowed into the expansion valve 14 is decompressed to low-pressure two-phase refrigerant. Two-phase refrigerant that has flowed out from the expansion valve 14 flows through the refrigerant pipe 82 and divides into the refrigerant pipe 82a and the refrigerant pipe 82b. Two-phase refrigerant diverted into the refrigerant pipe 82a is further decompressed at the capillary tube 17a and then flows into the first outdoor heat exchanger 15a. Two-phase refrigerant diverted into the refrigerant pipe 82b is further decompressed at the capillary tube 17b and then flows into the second outdoor heat exchanger 15b.

Both of the first outdoor heat exchanger 15a and the second outdoor heat exchanger 15b serve as an evaporator at the time of the heating operation. That is, in each of the first outdoor heat exchanger 15a and the second outdoor heat exchanger 15b, heat is exchanged between refrigerant flowing inside the outdoor heat exchanger and outdoor air sent by the outdoor fan, and the heat of evaporation of the refrigerant is absorbed from the outdoor air. As a result, two-phase refrigerant that has flowed into each of the first outdoor heat exchanger 15a and the second outdoor heat exchanger 15b evaporates into low-pressure gas refrigerant.

Gas refrigerant that has flowed out from the first outdoor heat exchanger 15a flows through the refrigerant pipe 83a, the second flow switch valve 21a, the low pressure pipe 70a, the low pressure pipe 70, and the suction pipe 62 and is taken into the compressor 11. Gas refrigerant that has flowed out from the second outdoor heat exchanger 15b flows through the refrigerant pipe 83b, the third flow switch valve 21b, and the low pressure pipe 70b, merges with gas refrigerant that has flowed out from the first outdoor heat exchanger 15a, and is taken into the compressor 11. That is, gas refrigerant that has flowed out from the first outdoor heat exchanger 15a and gas refrigerant that has flowed out from the second outdoor heat exchanger 15b are taken into the compressor 11 without flowing through the first flow switch valve 12. Gas refrigerant taken into the compressor 11 is compressed into high-pressure gas refrigerant. At the time of the heating operation, the cycle described above is repeated continuously.

At the time of the heating operation, all the first port G of the first flow switch valve 12, the fifth port K of the second flow switch valve 21a, and the fifth port O of the third flow switch valve 21b are maintained at high pressure or intermediate pressure. At the time of the heating operation, all the second port E of the first flow switch valve 12, the sixth port I of the second flow switch valve 21a, and the sixth port M of the third flow switch valve 21b are maintained at low pressure.

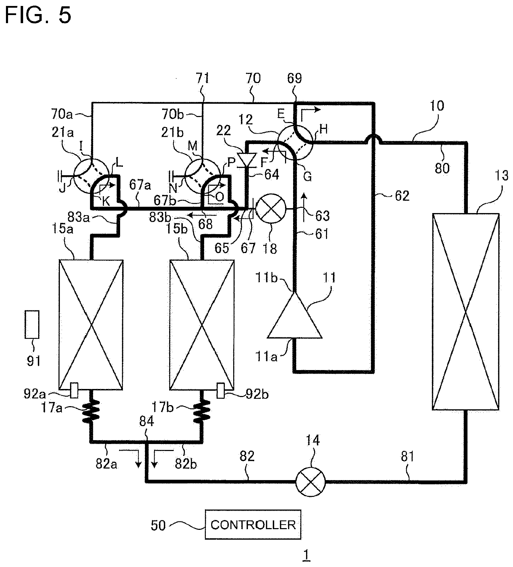

Next, the operation of the refrigeration cycle apparatus 1 at the time of the defrosting operation will be described. Fig. 5 is a diagram illustrating the operation of the refrigeration cycle apparatus 1 according to Embodiment 1 at the time of the defrosting operation. As illustrated in Fig. 5, at the time of the defrosting operation, the first flow switch valve 12 is set to be in the second state, in which the first port G communicates with the third port F, and the second port E communicates with the fourth port H. The second flow switch valve 21a is set to be in the second state, in which the fifth port K communicates with the seventh port L, and the sixth port I communicates with the eighth port J. The third flow switch valve 21b is set to be in the second state, in which the fifth port O communicates with the seventh port P, and the sixth port M communicates with the eighth port N.

The bypass expansion valve 18 is set to be in, for example, the closed state. The flow of refrigerant in the direction from the third port F of the first flow switch valve 12 toward the first high pressure pipe 67 is allowed by the check valve 22. In a case where an on-off valve is used instead of the check valve 22, the on-off valve is set to be in the open state. As a result, the flow of refrigerant in the direction from the third port F of the first flow switch valve 12 toward the first high pressure pipe 67 is allowed by the on-off valve.

High-pressure gas refrigerant discharged from the compressor 11 flows through the discharge pipe 61, the first flow switch valve 12, the second high pressure pipe 64, and the first high pressure pipe 67 and divides into the first high pressure pipe 67a and the first high pressure pipe 67b. Gas refrigerant diverted into the first high pressure pipe 67a flows into the first outdoor heat exchanger 15a via the second flow switch valve 21a and the refrigerant pipe 83a. Gas refrigerant diverted into the first high pressure pipe 67b flows into the second outdoor heat exchanger 15b via the third flow switch valve 21b and the refrigerant pipe 83b. Both of the first outdoor heat exchanger 15a and the second outdoor heat exchanger 15b serve as a condenser at the time of the defrosting operation. That is, at the first outdoor heat exchanger 15a and the second outdoor heat exchanger 15b, heat transferred from refrigerant flowing inside each of the first outdoor heat exchanger 15a and the second outdoor heat exchanger 15b melts frost formed on a corresponding one of the first outdoor heat exchanger 15a and the second outdoor heat exchanger 15b. As a result, the first outdoor heat exchanger 15a and the second outdoor heat exchanger 15b are defrosted. Gas refrigerant that has flowed into the first outdoor heat exchanger 15a and gas refrigerant that has flowed into the second outdoor heat exchanger 15b condense to liquid refrigerant.

Liquid refrigerant that has flowed out from the first outdoor heat exchanger 15a is decompressed at the capillary tube 17a and flows into the expansion valve 14 via the refrigerant pipe 82a and the refrigerant pipe 82. Liquid refrigerant that has flowed out from the second outdoor heat exchanger 15b is decompressed at the capillary tube 17b, flows through the refrigerant pipe 82b, merges with liquid refrigerant that has flowed out from the first outdoor heat exchanger 15a, and flows into the expansion valve 14. Liquid refrigerant that has flowed into the expansion valve 14 is decompressed to low-pressure two-phase refrigerant. Two-phase refrigerant that has flowed out from the expansion valve 14 flows into the indoor heat exchanger 13 via the refrigerant pipe 81. The indoor heat exchanger 13 serves as an evaporator at the time of the defrosting operation. That is, in the indoor heat exchanger 13, the heat of evaporation of refrigerant flowing inside the indoor heat exchanger 13 is absorbed from indoor air. As a result, two-phase refrigerant that has flowed into the indoor heat exchanger 13 evaporates into low-pressure gas refrigerant. Gas refrigerant that has flowed out from the indoor heat exchanger 13 flows through the refrigerant pipe 80, the first flow switch valve 12, and the suction pipe 62, and is taken into the compressor 11. Gas refrigerant taken into the compressor 11 is compressed into high-pressure gas refrigerant. At the time of the defrosting operation, the cycle described above is repeated continuously.

At the time of the defrosting operation, all the first port G of the first flow switch valve 12, the fifth port K of the second flow switch valve 21a, and the fifth port O of the third flow switch valve 21b are maintained at high pressure. At the time of the defrosting operation, all the second port E of the first flow switch valve 12, the sixth port I of the second flow switch valve 21a, and the sixth port M of the third flow switch valve 21b are maintained at low pressure.

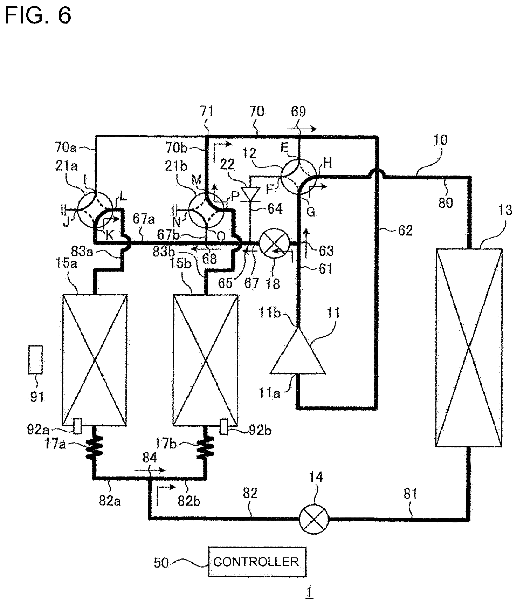

Next, the operation of the refrigeration cycle apparatus 1 at the time of the simultaneous heating-defrosting operation will be described. The simultaneous heating-defrosting operation includes a first operation and a second operation. At the time of the first operation, the first outdoor heat exchanger 15a and the indoor heat exchanger 13 serve as a condenser, and the second outdoor heat exchanger 15b serves as an evaporator. As a result, the first outdoor heat exchanger 15a is defrosted while continuing heating. At the time of the second operation, the second outdoor heat exchanger 15b and the indoor heat exchanger 13 serve as a condenser, and the first outdoor heat exchanger 15a serves as an evaporator. As a result, the second outdoor heat exchanger 15b is defrosted while continuing heating. Fig. 6 is a diagram illustrating the operation of the refrigeration cycle apparatus 1 according to Embodiment 1 at the time of the first operation during the simultaneous heating-defrosting operation.

As illustrated in Fig. 6, at the time of the first operation, the first flow switch valve 12 is set to be in the first state, in which the first port G communicates with the fourth port H, and the second port E communicates with the third port F. The second flow switch valve 21a is set to be in the second state, in which the fifth port K communicates with the seventh port L, and the sixth port I communicates with the eighth port J. The third flow switch valve 21b is set to be in the first state, in which the fifth port O communicates with the eighth port N, and the sixth port M communicates with the seventh port P.

The bypass expansion valve 18 is set to be in the open state at a predetermined opening degree. The flow of refrigerant in the direction from the first high pressure pipe 67 toward the third port F of the first flow switch valve 12 is blocked by the check valve 22. In a case where an on-off valve is used instead of the check valve 22, the on-off valve is set to be in the closed state. As a result, the flow of refrigerant in the direction from the first high pressure pipe 67 toward the third port F of the first flow switch valve 12 is blocked by the on-off valve.

A portion of high-pressure gas refrigerant discharged from the compressor 11 is diverted into the first high pressure pipe 67 from the discharge pipe 61. Gas refrigerant that has diverted into the first high pressure pipe 67 is decompressed at the bypass expansion valve 18 to be at intermediate pressure and flows into the first outdoor heat exchanger 15a via the first high pressure pipe 67a, the second flow switch valve 21a, and the refrigerant pipe 83a. At the first outdoor heat exchanger 15a, heat transferred from refrigerant flowing inside the first outdoor heat exchanger 15a melts frost formed on the first outdoor heat exchanger 15a. As a result, the first outdoor heat exchanger 15a is defrosted. Gas refrigerant that has flowed into the first outdoor heat exchanger 15a condenses to intermediate-pressure liquid refrigerant or two-phase refrigerant, flows out from the first outdoor heat exchanger 15a, and is decompressed at the capillary tube 17a.

Out of high-pressure gas refrigerant discharged from the compressor 11, gas refrigerant other than the high-pressure gas refrigerant that has been diverted into the first high pressure pipe 67 flows into the indoor heat exchanger 13 via the first flow switch valve 12 and the refrigerant pipe 80. In the indoor heat exchanger 13, heat is exchanged between refrigerant flowing inside the indoor heat exchanger 13 and indoor air sent by the indoor fan, and the heat of condensation of the refrigerant is transferred to the indoor air. As a result, the gas refrigerant that has flowed into the indoor heat exchanger 13 condenses to high-pressure liquid refrigerant. The indoor air sent by the indoor fan is heated by heat transferred from the refrigerant.

Liquid refrigerant that has flowed out from the indoor heat exchanger 13 flows into the expansion valve 14 via the refrigerant pipe 81. Liquid refrigerant that has flowed into the expansion valve 14 is decompressed to low-pressure two-phase refrigerant. Two-phase refrigerant that has flowed out from the expansion valve 14 flows through the refrigerant pipe 82, merges with liquid refrigerant or two-phase refrigerant decompressed at the capillary tube 17a, is further decompressed at the capillary tube 17b, and flows into the second outdoor heat exchanger 15b. In the second outdoor heat exchanger 15b, heat is exchanged between refrigerant flowing inside the second outdoor heat exchanger 15b and outdoor air sent by the outdoor fan, and the heat of evaporation of the refrigerant is absorbed from the outdoor air. As a result, two-phase refrigerant that has flowed into the second outdoor heat exchanger 15b evaporates into low-pressure gas refrigerant. Gas refrigerant that has flowed out from the second outdoor heat exchanger 15b flows through the refrigerant pipe 83b, the third flow switch valve 21b, the low pressure pipe 70b, the low pressure pipe 70, and the suction pipe 62, and is taken into the compressor 11. That is, gas refrigerant that has flowed out from the second outdoor heat exchanger 15b is taken into the compressor 11 without flowing through the first flow switch valve 12. Gas refrigerant taken into the compressor 11 is compressed into high-pressure gas refrigerant. At the time of the first operation during the simultaneous heating-defrosting operation, the first outdoor heat exchanger 15a is defrosted and heating is continued by continuously repeating the cycle described above.

At the time of the first operation during the simultaneous heating-defrosting operation, all the first port G of the first flow switch valve 12, the fifth port K of the second flow switch valve 21a, and the fifth port O of the third flow switch valve 21b are maintained at high pressure or intermediate pressure. At the time of the first operation, all the second port E of the first flow switch valve 12, the sixth port I of the second flow switch valve 21a, and the sixth port M of the third flow switch valve 21b are maintained at low pressure.

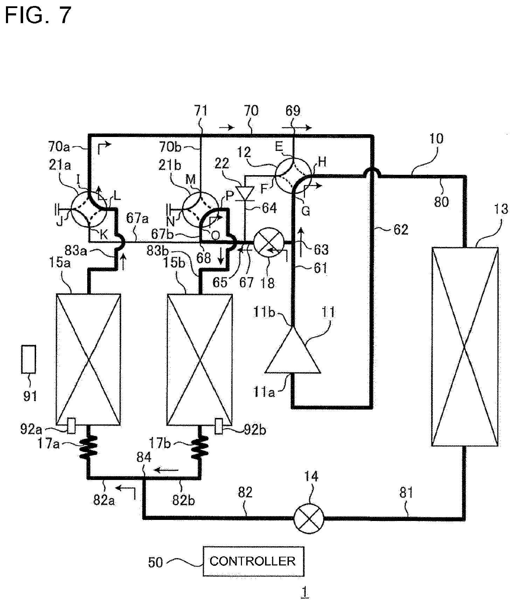

Fig. 7 is a diagram illustrating the operation of the refrigeration cycle apparatus 1 according to Embodiment 1 at the time of the second operation during the simultaneous heating-defrosting operation. As illustrated in Fig. 7, at the time of the second operation during the simultaneous heating-defrosting operation, unlike at the time of the first operation, the second flow switch valve 21a is set to be in the first state, and the third flow switch valve 21b is set to be in the second state. The first flow switch valve 12 and the bypass expansion valve 18 are set to be in the same states as those used in the first operation. As a result, at the time of the second operation, the second outdoor heat exchanger 15b is defrosted while continuing heating. At the time of the second operation, all the first port G of the first flow switch valve 12, the fifth port K of the second flow switch valve 21a, and the fifth port O of the third flow switch valve 21b are maintained at high pressure or intermediate pressure. At the time of the second operation, all the second port E of the first flow switch valve 12, the sixth port I of the second flow switch valve 21a, and the sixth port M of the third flow switch valve 21b are maintained at low pressure.

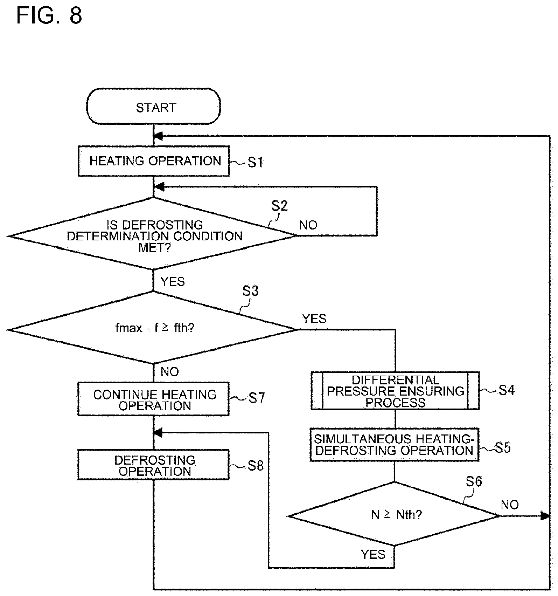

Fig. 8 is a flow chart illustrating the procedure of the operation of the refrigeration cycle apparatus 1 according to Embodiment 1. The operation control unit 501 of the controller 50 starts the heating operation on the basis of, for example, a heating operation start signal from the operation unit (S1). When the heating operation is started, the operation control unit 501 determines whether a defrosting determination condition is met (S2). The defrosting determination condition is that, for example, a period of time elapsed from the start of the heating operation exceeds a threshold time period (for example, 20 minutes). In a case where it is determined that the defrosting determination condition is met (S2: YES), the process proceeds to processing in step S3. In a case where it is determined that the defrosting determination condition is not met (S2: NO), processing in step S2 is periodically repeated.

In step S3, the operation control unit 501 acquires, as an operation frequency f, the value of the operation frequency of the compressor 11 at this point in time or the average value of the operation frequencies of the compressor 11 from the start of the heating operation to this point in time. Thereafter, the controller 50 determines whether a frequency difference value (fmax - f) is greater than or equal to a threshold fth, the frequency difference value being obtained by subtracting the operation frequency f from a maximum operation frequency fmax of the compressor 11 (S3). In this case, the maximum operation frequency fmax is the upper limit of the operation frequency range of the compressor 11. The value of the maximum operation frequency fmax and that of the threshold fth are prestored in the ROM of the controller 50. The compressor 11 is controlled such that the heavier the heating load, the higher the operation frequency, and thus the operation frequency of the compressor 11 is generally in proportion to the heating load.

In a case where the value obtained by subtracting the operation frequency f from the maximum operation frequency fmax is greater than or equal to the threshold fth (fmax - f ≥ fth) (S3: YES), the process proceeds to processing in step S4. In contrast, in a case where the value obtained by subtracting the operation frequency f from the maximum operation frequency fmax is smaller than the threshold fth (fmax - f < fth) (S3: NO), the process proceeds to processing in step S7.

In step S4, before switching from the heating operation to the simultaneous heating-defrosting operation, the condition determination unit 502 and the differential pressure ensuring unit 503 perform a differential pressure ensuring process (S4). The content of the differential pressure ensuring process will be described below in detail. After the differential pressure ensuring process, the operation control unit 501 performs the simultaneous heating-defrosting operation for a predetermined time period (S5). In the simultaneous heating-defrosting operation, the first operation, in which the first outdoor heat exchanger 15a is defrosted, is performed first, and thereafter the second operation, in which the second outdoor heat exchanger 15b is defrosted, is performed. In this case, the operation control unit 501 has a counter that stores the number of times N the simultaneous heating-defrosting operation is performed. The initial value of the counter is zero. In a case where the simultaneous heating-defrosting operation is performed, the operation control unit 501 adds one to the number of times N stored in the counter.

Next, the operation control unit 501 determines whether the number of times N the simultaneous heating-defrosting operation is performed is greater than or equal to a threshold Nth corresponding to the number of times (S6). In a case where the number of times N is greater than or equal to the threshold Nth corresponding to the number of times (N ≥ Nth) (S6: YES), the process proceeds to processing in step S8. Before proceeding to processing in step S8, the heating operation may be performed. In contrast, in a case where the number of times N is smaller than the threshold Nth corresponding to the number of times (N < Nth) (S6: NO), the process returns to step S1, and the heating operation is restarted.

In step S7, the operation control unit 501 further continues the heating operation for a predetermined time period. Thereafter, the process proceeds to processing in step S8. In step S8, the controller 50 ends the heating operation or the simultaneous heating-defrosting operation and performs the defrosting operation for a predetermined time period. Generally, a period during which the defrosting operation is performed is shorter than a period during which the simultaneous heating-defrosting operation is performed. Moreover, in a case where the operation control unit 501 has performed the defrosting operation, the operation control unit 501 initializes the counter and sets the number of times N the simultaneous heating-defrosting operation is performed to zero. After the operation control unit 501 has ended the defrosting operation, the process returns to step S1, and the operation control unit 501 restarts the heating operation.

Next, the differential pressure ensuring process in Embodiment 1 will be described. In the following, the second flow switch valve 21a will be described as an example of a valve operated by differential pressure; however, the first flow switch valve 12 and the third flow switch valve 21b also have the same configuration as that of the second flow switch valve 21a. For the second flow switch valve 21a, a minimum operating differential pressure necessary for operation is defined. When the difference between the pressure of refrigerant at the fifth port K, which is the high pressure port of the second flow switch valve 21a, and the pressure of refrigerant at the sixth port I, which is the low pressure port of the second flow switch valve 21a, becomes less than or equal to the minimum operating differential pressure, the second flow switch valve 21a does not operate. The meaning of "the second flow switch valve 21a does not operate" includes port switching not being performed or occurrence of intermediate stopping in which port switching stops partway. The minimum operating differential pressure varies depending on the specifications of the second flow switch valve 21a and is 0.1 Mpa to 0.2 Mpa, for example. The minimum operating differential pressure of the second flow switch valve 21a is ensured in normal operation environments; however, there is a case where the minimum operating differential pressure cannot be ensured under specific circumstances.

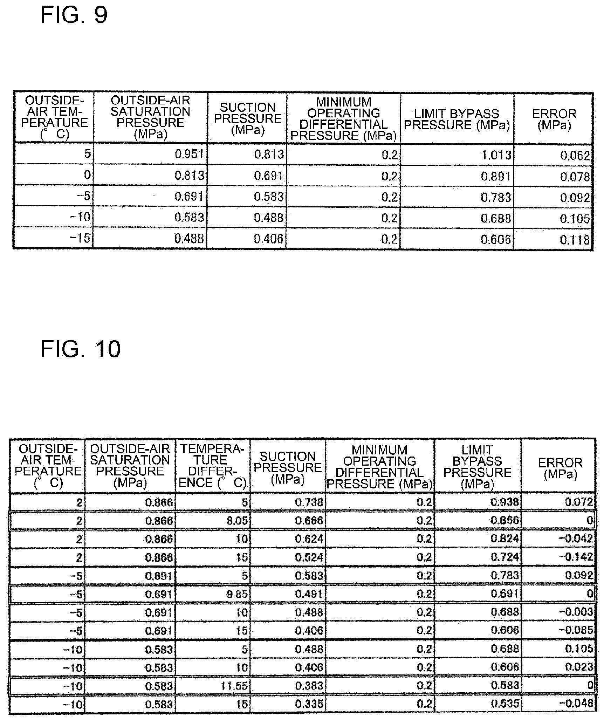

Fig. 9 is a table illustrating an example of a relationship between pressure at the second flow switch valve 21a and outdoor air temperature in Embodiment 1. The example in Fig. 9 illustrates pressures at the second flow switch valve 21a at the time of the heating operation in a state where the bypass expansion valve 18 is closed. Assume that the minimum operating differential pressure of the second flow switch valve 21a is 0.20 Mpa. Outdoor air saturation pressure is saturation pressure corresponding to outdoor air temperature and corresponds to the pressure of refrigerant at the high pressure port (the fifth port K) of the second flow switch valve 21a. Suction pressure is pressure corresponding to suction saturation temperature obtained by subtracting the temperature difference between outdoor air temperature and heat exchanger temperature from the outdoor air temperature and corresponds to the pressure of refrigerant at the low pressure port (the sixth port I) of the second flow switch valve 21a. Limit bypass pressure is obtained by adding minimum operating differential pressure to suction pressure and is the pressure of the high pressure port necessary for the second flow switch valve 21a to operate. Error corresponds to values obtained by subtracting outdoor air saturation pressure from limit bypass pressure. In other words, an error is the difference between the pressure of the high pressure port necessary to ensure the minimum operating differential pressure of the second flow switch valve 21a and an actual pressure of the high pressure port. In a case where the error has a negative value, the minimum operating differential pressure can be ensured. In a case where the error has a positive value, the minimum operating differential pressure cannot be ensured.

As illustrated in Fig. 9, it is clear that the lower the outdoor air temperature, the greater the error. Specifically, in a case where the outdoor air temperature is 5 degrees C, the error is 0.062 Mpa. In contrast, in a case where the outdoor air temperature is -15 degrees C, the error is 0.118 Mpa. That is, in a case where the outdoor air temperature is -15 degrees C, compared with the case where the outdoor air temperature is 5 degrees C, if the pressure of the high pressure port is not increased, the minimum operating differential pressure of the second flow switch valve 21a cannot be ensured.

Fig. 10 is a table illustrating an example of a relationship between pressure at the second flow switch valve 21a and operation frequency of the compressor 11 in Embodiment 1. The example in Fig. 10 illustrates pressures at the second flow switch valve 21a at the time of the heating operation in a state where the bypass expansion valve 18 is closed. Assume that the minimum operating differential pressure of the second flow switch valve 21a is 0.20 Mpa. The compressor 11 is controlled such that the heavier the heating load, the higher the operation frequency, and thus the operation frequency of the compressor 11 is generally in proportion to a heating load. A heating load is generally in proportion to the temperature difference between outdoor air temperature and a heat exchanger temperature. A heat exchange temperature is, for example, the average value of the temperature of the first outdoor heat exchanger 15a detected by the heat exchanger temperature sensor 92a and the temperature of the second outdoor heat exchanger 15b detected by the heat exchanger temperature sensor 92b. Note that the heat exchanger temperature may be either the temperature of the first outdoor heat exchanger 15a or the temperature of the second outdoor heat exchanger 15b. In Fig. 10, assume that the temperature difference between outdoor air temperature and a heat exchanger temperature represents the operation frequency of the compressor 11.

Outdoor air saturation pressure is saturation pressure corresponding to outdoor air temperature and corresponds to the pressure of refrigerant at the high pressure port (the fifth port K) of the second flow switch valve 21a. Suction pressure is pressure corresponding to suction saturation temperature obtained by subtracting the temperature difference between outdoor air temperature and heat exchanger temperature from the outdoor air temperature and corresponds to the pressure of refrigerant at the low pressure port (the sixth port I) of the second flow switch valve 21a. Limit bypass pressure is obtained by adding minimum operating differential pressure to suction pressure and is the pressure of the high pressure port necessary for the second flow switch valve 21a to operate. Error corresponds to the difference between limit bypass pressure and outdoor air saturation pressure. In other words, an error represents the difference between the pressure of the high pressure port necessary to ensure the minimum operating differential pressure of the second flow switch valve 21a and an actual pressure of the high pressure port. In a case where the error has a negative value, the minimum operating differential pressure can be ensured. In a case where the error has a positive value, the minimum operating differential pressure cannot be ensured.

As illustrated in Fig. 10, it is clear that the smaller the temperature difference between outdoor air temperature and heat exchanger temperature, that is, the lower the operation frequency of the compressor 11, the greater the error. Specifically, in a case where the outdoor air temperature is 2 degrees C and the temperature difference is 15 degrees C, the error is -0.142 Mpa, and the minimum operating differential pressure can be ensured. In contrast, in a case where the temperature difference is 5 degrees C, the error is 0.072 Mpa, and the minimum operating differential pressure cannot be ensured. That is, in a case where the outdoor air temperature is 2 degrees C and the temperature difference is 5 degrees C, compared with the case where the temperature difference is 15 degrees C, if the pressure of the high pressure port is not increased, the minimum operating differential pressure of the second flow switch valve 21a cannot be ensured.

On the basis of the above, in a case where outdoor air temperature is low or a case where the temperature difference between outdoor air temperature and heat exchanger temperature is small, that is, in a case where the operation frequency of the compressor 11 is low, there may be a case where the minimum operating differential pressure of the second flow switch valve 21a cannot be ensured. In Embodiment 1, a case where outdoor air temperature is low or a case where the temperature difference between outdoor air temperature and heat exchanger temperature is small, that is, a case where the operation frequency of the compressor 11 is low is treated as a first condition. In a case where the first condition is met, the opening degree of the bypass expansion valve 18 is controlled to increase the pressure of the high pressure port.

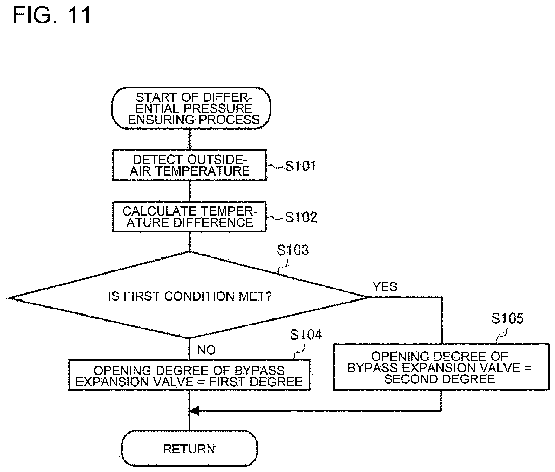

Fig. 11 is a flow chart illustrating the procedure of the differential pressure ensuring process of Embodiment 1. This process is performed by the condition determination unit 502 and the differential pressure ensuring unit 503 of the controller 50. In this process, first, outdoor air temperature is detected by the outdoor air temperature sensor 91 (S101). The temperature difference between the outdoor air temperature and a heat exchanger temperature is calculated by the condition determination unit 502 (S102). Specifically, the temperature of the first outdoor heat exchanger 15a is detected by the heat exchanger temperature sensor 92a, and the temperature of the second outdoor heat exchanger 15b is detected by the heat exchanger temperature sensor 92b. The average value of these temperatures is calculated as the heat exchanger temperature. Thereafter, the temperature difference between the outdoor air temperature and the heat exchanger temperature is calculated.

Subsequently, the condition determination unit 502 determines whether the first condition is met (S103). The first condition corresponds to, for example, a case where the outdoor air temperature is lower than or equal to a first threshold or a case where the temperature difference between the outdoor air temperature and the heat exchanger temperature is lower than or equal to a second threshold. The first threshold and the second threshold are set in advance and are stored in the storage unit 504 of the controller 50. For example, the first threshold is 0 degrees C. As illustrated in Fig. 9, in a case where the outdoor air temperature is lower than or equal to 5 degrees C, the error has a positive value. Thus, a temperature that is freely set and less than or equal to 5 degrees C may be treated as the first threshold. The second threshold is, for example, 8.05 degrees C. As illustrated in Fig. 10, in a case where the outdoor air temperature is 2 degrees C, when the temperature difference between the outdoor air temperature and the heat exchanger temperature is 8.05 degrees C, the error is 0. As a result, even in a case where the outdoor air temperature is higher than 0 degrees C, when the temperature difference is less than 8.05 degrees C, it is estimated that the minimum operating differential pressure cannot be ensured. Thus, the second threshold is set to 8.05 degrees C.

Note that the first condition is not limited to the above. For example, the first condition may correspond only to a case where the outdoor air temperature is lower than or equal to the first threshold. Alternatively, the first condition may correspond only to a case where the temperature difference between the outdoor air temperature and the heat exchanger temperature is lower than or equal to the second threshold. Furthermore, the first condition may correspond to a case where the outdoor air temperature is lower than or equal to the first threshold and the temperature difference between the outdoor air temperature and the heat exchanger temperature is lower than or equal to the second threshold. Moreover, when the first condition includes a case where the temperature difference between the outdoor air temperature and the heat exchanger temperature is lower than or equal to the second threshold, a plurality of second thresholds may be set in accordance with outdoor air temperature. For example, in the case of the example in Fig. 10, the second threshold may be 8 degrees C when the outdoor air temperature is 0 to 5 degrees C, the second threshold may be 9.85 degrees C when the outdoor air temperature is 0 degrees C to -5 degrees C, and the second threshold may be 11.55 degrees C when the outdoor air temperature is -5 degrees C to -10 degrees C. Any of the second thresholds may be selected in accordance with the outdoor air temperature. The first threshold and the second threshold are set as appropriate in accordance with the minimum operating differential pressure of the second flow switch valve 21a and the specifications and operation environment of the refrigeration cycle apparatus 1 and are not limited to the examples above.

In a case where the first condition is not met (S103: NO), the opening degree of the bypass expansion valve 18 is set to a predetermined first degree (S104). In contrast, in a case where the first condition is met (S103: YES), the opening degree of the bypass expansion valve 18 is set to a second degree, which is larger than the first degree, by the differential pressure ensuring unit 503 (S105). For example, the second degree is 1.5 times larger than the first degree. As a result, the differential pressure ensuring process ends, the second flow switch valve 21a is switched, and the first operation of the simultaneous heating-defrosting operation is performed in step S6 of Fig. 8. In this case, under circumstances where the first condition is met, that is, under circumstances where the minimum operating differential pressure of the second flow switch valve 21a is not ensured, the opening degree of the bypass expansion valve 18 is set to the second degree, which is larger than the first degree. As a result, the pressure of the high pressure port (the fifth port K) of the second flow switch valve 21a increases, and a pressure difference greater than or equal to the minimum operating differential pressure is ensured between the high pressure port of the second flow switch valve 21a and the low pressure port (the sixth port I) of the second flow switch valve 21a.

As above, according to Embodiment 1, when the heating operation is switched to the simultaneous heating-defrosting operation, the minimum operating differential pressure of the second flow switch valve 21a can be ensured by performing the differential pressure ensuring process. Consequently, the second flow switch valve 21a can be normally operated in any environment.

### Embodiment 2.

Next, Embodiment 2 will be described. Embodiment 2 differs from Embodiment 1 in that the differential pressure ensuring process is performed when the first operation is switched to the second operation in the simultaneous heating-defrosting operation. The other configuration of and control performed on the refrigeration cycle apparatus 1 are the same as those of Embodiment 1.

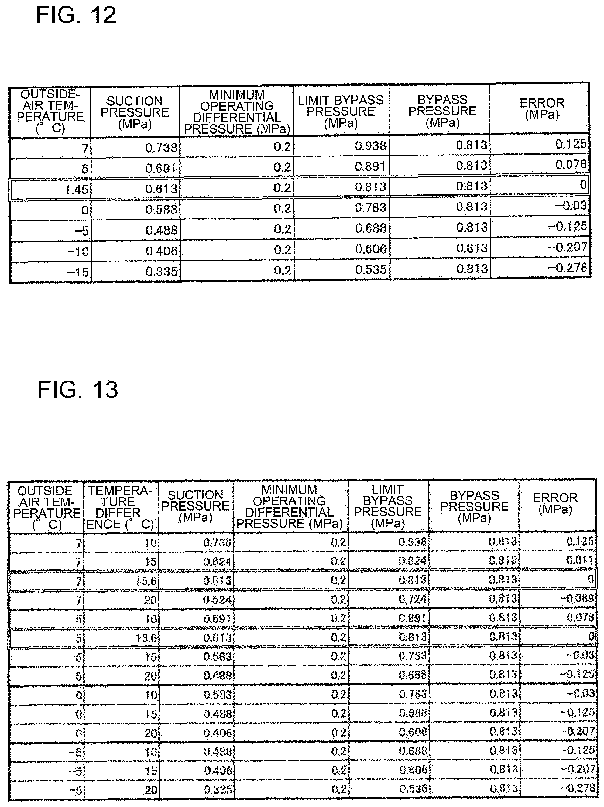

Fig. 12 is a table illustrating an example of a relationship between pressure at the second flow switch valve 21a and outdoor air temperature in Embodiment 2. The example in Fig. 12 illustrates pressures at the second flow switch valve 21a at the time of the first operation in the simultaneous heating-defrosting operation in a state where the bypass expansion valve 18 is closed. The minimum operating differential pressure of the second flow switch valve 21a is 0.20 Mpa. Suction pressure is pressure corresponding to suction saturation temperature obtained by subtracting the temperature difference between outdoor air temperature and heat exchanger temperature from the outdoor air temperature and corresponds to the pressure of refrigerant at the low pressure port (the sixth port I) of the second flow switch valve 21a. Note that a heat exchanger temperature according to Embodiment 2 is the temperature of the second outdoor heat exchanger 15b detected by the heat exchanger temperature sensor 92b. Limit bypass pressure is obtained by adding minimum operating differential pressure to suction pressure and is the pressure of the high pressure port necessary for the second flow switch valve 21a to operate.

Bypass pressure is the pressure of the high pressure port (the fifth port K) of the second flow switch valve 21a and is the pressure of the first outdoor heat exchanger 15a in Embodiment 2. In Embodiment 2, the first outdoor heat exchanger 15a is operating the defrosting operation, and thus the saturation temperature of refrigerant is 0 degrees C to 5 degrees C, and the pressure of the refrigerant is 0.813 Mpa to 0.951 Mpa in the first outdoor heat exchanger 15a. In the example in Fig. 12, the bypass pressure is set to 0.813 Mpa (saturation temperature = 0 degrees C). Error corresponds to values obtained by subtracting bypass pressure from limit bypass pressure. In other words, an error is the difference between the pressure of the high pressure port necessary to ensure the minimum operating differential pressure of the second flow switch valve 21a and an actual pressure of the high pressure port. In a case where the error has a negative value, the minimum operating differential pressure can be ensured. In a case where the error has a positive value, the minimum operating differential pressure cannot be ensured.

As illustrated in Fig. 12, in Embodiment 2, it is clear that the higher the outdoor air temperature, the greater the error. Specifically, when the outdoor air temperature becomes higher than 1.45 degrees C, the error has a positive value, and the minimum operating differential pressure cannot be ensured. Note that in a case where the bypass pressure is set to 0.951 Mpa (saturation temperature = 5 degrees C), even when the outdoor air temperature is 7 degrees C, the error has a negative value (0.938 Mpa - 0.951 Mpa = -0.013 Mpa), and the minimum operating differential pressure can be ensured. Thus, by setting the bypass pressure to 0.951 Mpa or lower, the second flow switch valve 21a and the third flow switch valve 21b operate assuredly at the outdoor air temperature at which frost forms. Thus, in the following, description will be made using 0.813 Mpa as the bypass pressure.

Fig. 13 is a table illustrating an example of a relationship between pressure at the second flow switch valve 21a and operation frequency of the compressor 11 in Embodiment 2. The example in Fig. 13 illustrates pressures at the second flow switch valve 21a at the time of the first operation in the simultaneous heating-defrosting operation in a state where the bypass expansion valve 18 is closed. The minimum operating differential pressure of the second flow switch valve 21a is 0.20 Mpa. Similarly to as in Embodiment 1, assume that the temperature difference between outdoor air temperature and heat exchanger temperature represents the operation frequency of the compressor 11. Note that a heat exchanger temperature according to Embodiment 2 is the temperature of the second outdoor heat exchanger 15b detected by the heat exchanger temperature sensor 92b. Suction pressure is pressure corresponding to suction saturation temperature obtained by subtracting the temperature difference between outdoor air temperature and heat exchanger temperature from the outdoor air temperature and corresponds to the pressure of refrigerant at the low pressure port (the sixth port I) of the second flow switch valve 21a. Limit bypass pressure is obtained by adding minimum operating differential pressure to suction pressure and is the pressure of the high pressure port necessary for the second flow switch valve 21a to operate. Bypass pressure is the pressure of the high pressure port (the fifth port K) of the second flow switch valve 21a and is the pressure of the first outdoor heat exchanger 15a in Embodiment 2. In the example in Fig. 12, the bypass pressure is set to 0.813 Mpa (saturation temperature = 0 degrees C). Error corresponds to values obtained by subtracting bypass pressure from limit bypass pressure. In other words, an error is the difference between the pressure of the high pressure port necessary to ensure the minimum operating differential pressure of the second flow switch valve 21a and an actual pressure of the high pressure port. In a case where the error has a negative value, the minimum operating differential pressure can be ensured. In a case where the error has a positive value, the minimum operating differential pressure cannot be ensured.

As illustrated in Fig. 13, it is clear that the smaller the temperature difference between outdoor air temperature and heat exchanger temperature, that is, the lower the frequency of the compressor 11, the greater the error. Specifically, in a case where the outdoor air temperature is 5 degrees C and the temperature difference is 15 degrees C, the error is -0.03 Mpa, and the minimum operating differential pressure can be ensured. In contrast, in a case where the temperature difference is 10 degrees C, the error is 0.078 Mpa, and the minimum operating differential pressure cannot be ensured. That is, in a case where the outdoor air temperature is 5 degrees C and the temperature difference is 10 degrees C, compared with the case where the temperature difference is 15 degrees C, if the pressure of the high pressure port is not increased, the minimum operating differential pressure of the second flow switch valve 21a cannot be ensured.

On the basis of the above, in Embodiment 2, in a case where outdoor air temperature is high or a case where the temperature difference between outdoor air temperature and heat exchanger temperature is small, that is, in a case where the operation frequency of the compressor 11 is low, there may be a case where the minimum operating differential pressure cannot be ensured. In Embodiment 2, a case where outdoor air temperature is high or a case where the temperature difference between outdoor air temperature and heat exchanger temperature is small, that is, a case where the operation frequency of the compressor 11 is low is treated as a first condition. In a case where the first condition is met, the opening degree of the bypass expansion valve 18 is controlled to increase the pressure of the high pressure port.

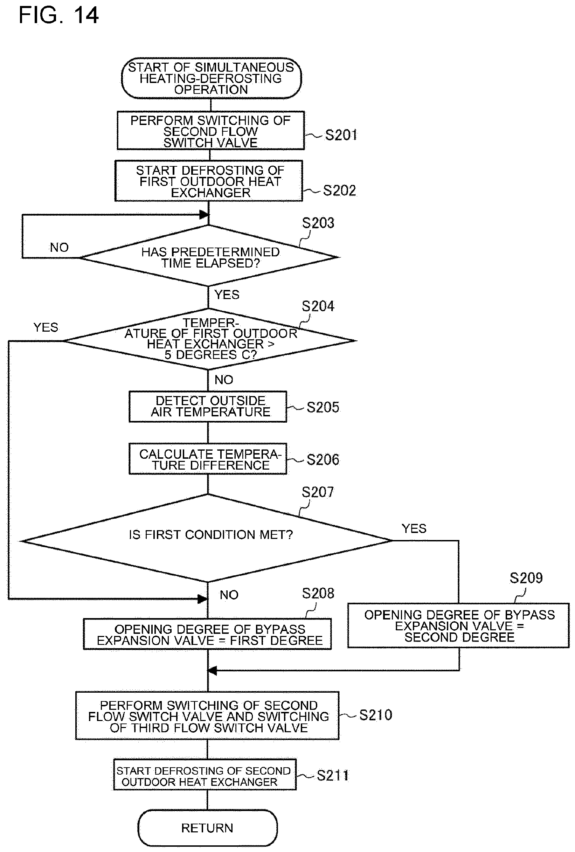

Fig. 14 is a flow chart illustrating the procedure of a simultaneous heating-defrosting operation of Embodiment 2. This process is performed by the operation control unit 501, the condition determination unit 502, and the differential pressure ensuring unit 503 of the controller 50. In Embodiment 2, steps S205 to S209 of Fig. 14 correspond to the differential pressure ensuring process. In the simultaneous heating-defrosting operation, first, the first operation is performed. Specifically, the second flow switch valve 21a is switched to be in the second state by the operation control unit 501 (S201). In this case, the third flow switch valve 21b is maintained at the first state as in the case of the heating operation. In accordance with a result from the differential pressure ensuring process, the bypass expansion valve 18 is set to be in the open state at the first degree or the second degree, and defrosting of the first outdoor heat exchanger 15a is started (S202). It is then determined whether a predetermined time has elapsed from the start of defrosting of the first outdoor heat exchanger 15a (S203). The predetermined time is an estimated time to complete defrosting of the first outdoor heat exchanger 15a, and a freely set time is set. In a case where the predetermined time has elapsed (S203: YES), the process proceeds to processing in step S204. In a case where the predetermined time has not elapsed (S203: NO), processing in step S203 is periodically repeated.

In step S204, the condition determination unit 502 determines whether the temperature of the first outdoor heat exchanger 15a detected by the heat exchanger temperature sensor 92a is higher than 5 degrees C (S204). In a case where the temperature of the first outdoor heat exchanger 15a is higher than 5 degrees C (S204: YES), the process proceeds to processing in step S208. In a case where the temperature of the first outdoor heat exchanger 15a is higher than 5 degrees C, the bypass pressure is 0.951 Mpa, and the minimum operating differential pressure can be ensured even when the outdoor air temperature is 7 degrees C. Thus, in a case where the temperature of the first outdoor heat exchanger 15a is higher than 5 degrees C, the differential pressure ensuring process is not performed, and the process proceeds to processing in step S208.

In contrast, in a case where the temperature of the first outdoor heat exchanger 15a is less than or equal to 5 degrees C (S204: NO), the process proceeds to processing in step S205. In step S205, outdoor air temperature is detected by the outdoor air temperature sensor 91 (S205). The temperature difference between the outdoor air temperature and a heat exchanger temperature is then calculated (S206). Specifically, the temperature difference between the outdoor air temperature and the temperature of the second outdoor heat exchanger 15b detected by the heat exchanger temperature sensor 92b is calculated.

Subsequently, the condition determination unit 502 determines whether the first condition is met (S207). The first condition corresponds to, for example, a case where the outdoor air temperature is higher than or equal to a third threshold and the temperature difference between the outdoor air temperature and the heat exchanger temperature is lower than or equal to a fourth threshold. The third threshold and the fourth threshold are set in advance and are stored in the memory of the controller 50. For example, the third threshold is 1.45 degrees C. The fourth threshold is, for example, 15.6 degrees C. As illustrated in Fig. 13, in a case where the outdoor air temperature is 7 degrees C, when the temperature difference is greater than 15.6 degrees C, the error has a negative value. As a result, even in a case where the outdoor air temperature is higher than or equal to 1.45 degrees C, when the temperature difference is greater than 15.6 degrees C, it is clear that the minimum operating differential pressure can be ensured. Thus, by treating, as the first condition, a case where the outdoor air temperature is higher than or equal to the third threshold and the temperature difference between the outdoor air temperature and the heat exchanger temperature is lower than or equal to the fourth threshold, control for the differential pressure ensuring process can be prevented from being performed unnecessarily in a case where the differential pressure ensuring process is unnecessary.

Note that the first condition is not limited to the above. For example, the first condition may correspond only to a case where the outdoor air temperature is higher than or equal to the third threshold. Alternatively, the first condition may correspond only to a case where the temperature difference between the outdoor air temperature and the heat exchanger temperature is lower than or equal to the fourth threshold. Furthermore, the first condition may correspond to a case where the outdoor air temperature is higher than or equal to the third threshold or where the temperature difference between the outdoor air temperature and the heat exchanger temperature is lower than or equal to the fourth threshold. Moreover, when the first condition includes a case where the temperature difference between the outdoor air temperature and the heat exchanger temperature is lower than or equal to the fourth threshold, a plurality of fourth thresholds may be set in accordance with outdoor air temperature. For example, in the case of the example in Fig. 13, the fourth threshold may be 15.6 degrees C when the outdoor air temperature is 7 degrees C, and the fourth threshold may be 13.6 degrees C when the outdoor air temperature is 5 degrees C. Any one of the fourth thresholds may be selected in accordance with the outdoor air temperature. The third threshold and the fourth threshold are set as appropriate in accordance with the minimum operating differential pressure of the second flow switch valve 21a and the specifications and operation environment of the refrigeration cycle apparatus 1 and are not limited to the examples above.

In a case where the first condition is not met (S207: NO), the opening degree of the bypass expansion valve 18 is set to a predetermined first degree (S208). In contrast, in a case where the first condition is met (S207: YES), the opening degree of the bypass expansion valve 18 is set to a second degree, which is larger than the first degree, by the differential pressure ensuring unit 503 (S209). For example, the second degree is 1.5 times larger than the first degree. As a result, the differential pressure ensuring process ends, and the second operation of the simultaneous heating-defrosting operation is performed. Specifically, the second flow switch valve 21a is switched to be in the first state, and the third flow switch valve 21b is switched to be in the second state (S210). The bypass expansion valve 18 is set to be in the open state at the first degree or the second degree, and defrosting of the second outdoor heat exchanger 15b is started (S211). In this case, under circumstances where the first condition is met, that is, under circumstances where the minimum operating differential pressure of the second flow switch valve 21a is not ensured, the opening degree of the bypass expansion valve 18 is set to the second degree, which is larger than the first degree. As a result, the pressure of the high pressure port (the fifth port K) of the second flow switch valve 21a increases, and a pressure difference greater than or equal to the minimum operating differential pressure is ensured between the high pressure port of the second flow switch valve 21a and the low pressure port (the sixth port I) of the second flow switch valve 21a. Note that, similarly to as in the case of the second flow switch valve 21a, the minimum operating differential pressure of the third flow switch valve 21b can also be ensured by performing the differential pressure ensuring process.

As described above, in Embodiment 2, when the first operation of the simultaneous heating-defrosting operation is switched to the second operation of the simultaneous heating-defrosting operation, the minimum operating differential pressure of the second flow switch valve 21a and that of the third flow switch valve 21b can be ensured by performing the differential pressure ensuring process. Consequently, the second flow switch valve 21a and the third flow switch valve 21b can be normally operated in any environment.

### Embodiment 3.

Next, Embodiment 3 will be described. Embodiment 3 differs from Embodiment 1 in that the bypass expansion valve 18 has a flow path for ensuring a minimum operating differential pressure. The other configuration of a refrigeration cycle apparatus 1 is the same as that of Embodiment 1.

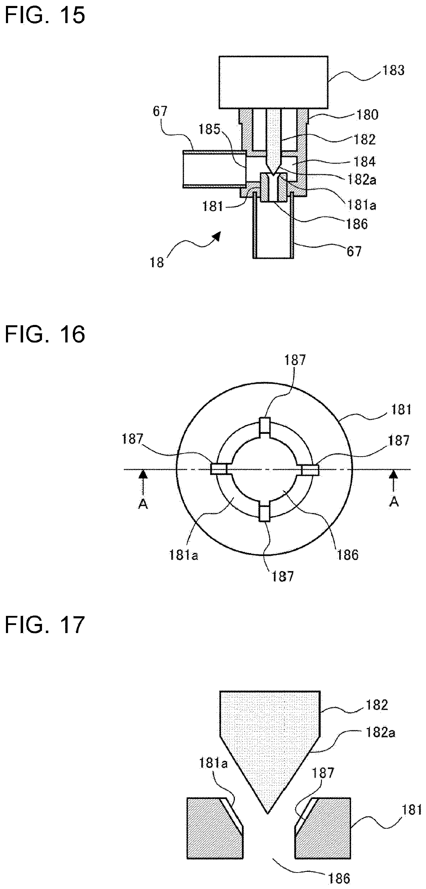

Fig. 15 is a schematic configuration diagram of the bypass expansion valve 18 of the refrigeration cycle apparatus 1 according to Embodiment 3. The bypass expansion valve 18 is an electronic expansion valve whose opening degree is controlled by the controller 50. As illustrated in Fig. 15, the bypass expansion valve 18 has a main body 180, a base 181 and a needle 182 arranged in the main body 180, and a drive device 183, which drives the needle 182.

The main body 180 is formed by, for example, cutting and processing a brass casting. A valve chamber 184, into which refrigerant flows, is formed inside the main body 180. A refrigerant inlet 185, which is for causing refrigerant to flow into the valve chamber 184, is formed in the side surface of the main body 180. A portion of the first high pressure pipe 67 on the bifurcation 63 side (Fig. 1) is connected to the refrigerant inlet 185.

The base 181 is arranged such that the base 181 penetrates through the bottom of the main body 180. The base 181 has a tubular shape, and a refrigerant outlet 186, which penetrates through the base 181 in the axial direction of the base 181, is formed in the center of the base 181. A portion of the first high pressure pipe 67 on the bifurcation 65 side (Fig. 1) is connected to the refrigerant outlet 186, and refrigerant whose pressure is reduced flows out from the refrigerant outlet 186. A slope portion 181a, which widens upward, is formed at the upstream end of the refrigerant outlet 186 in the base 181.

The needle 182 has a tip portion 182a having a conical shape and is arranged in the valve chamber 184. The needle 182 is arranged such that the tip portion 182a faces the refrigerant outlet 186 formed in the base 181, and is configured to move in the direction toward the base 181 and in the direction away from the base 181. The tip portion 182a of the needle 182 has a shape matching the slope portion 181a of the base 181, and the refrigerant outlet 186 is blocked by fitting the tip portion 182a of the needle 182 into the slope portion 181a of the base 181. By moving the needle 182 to change the distance to the base 181, the opening degree of the refrigerant outlet 186 can be changed, and the flow rate of flowing-out refrigerant can be changed. That is, the base 181 and the needle 182 form a restriction portion of the bypass expansion valve 18.

The drive device 183 is provided on the top of the main body 180. The drive device 183 includes, for example, a stepping motor or an electromagnetic coil and causes the needle 182 to reciprocate in the direction toward the base 181 and in the direction away from the base 181 in accordance with a control signal from the controller 50.

Fig. 16 is a plan view of the base 181 of the bypass expansion valve 18 according to Embodiment 3. Fig. 17 is a cross-sectional view of the restriction portion of the bypass expansion valve 18 according to Embodiment 3. Fig. 17 is an enlarged view of a portion of the base 181 and that of the needle 182 included in the restriction portion, and is a cross-sectional view taken along A-A of Fig. 16 from an arrow direction. As illustrated in Figs. 16 and 17, recess 187 are formed at the slope portion 181a of the base 181 of Embodiment 3. The recess 187 are each a recess formed by cutting away a portion of the slope portion 181a from the top end to the bottom end of the slope portion 181a. In Embodiment 3, four recess 187 are arranged at equal intervals in the circumferential direction.

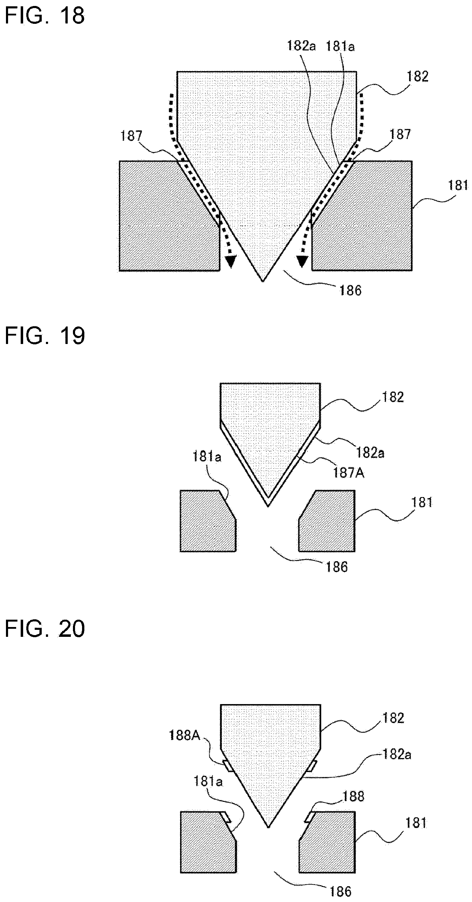

Fig. 18 is a cross-sectional view of the restriction portion in a case where the bypass expansion valve 18 according to Embodiment 3 is in the closed state. The case where the bypass expansion valve 18 is in the closed state corresponds to a state where the tip portion 182a of the needle 182 abuts against the slope portion 181a of the base 181. In the existing technology, in the case where the bypass expansion valve 18 is in the closed state, a gap is not present between the base and the needle, and refrigerant does not flow to the refrigerant outlet 186. In contrast, in Embodiment 3, the slope portion 181a of the base 181 has the recess 187, and thus even when the bypass expansion valve 18 is in the closed state, flow paths as indicated by broken lines in Fig. 18 are formed between the base 181 and the needle 182. As a result, even in a case where the bypass expansion valve 18 is in the closed state, refrigerant inside the valve chamber 184 can be caused to flow out from the refrigerant outlet 186. Consequently, a predetermined amount of high-pressure refrigerant can always be caused to flow to the fifth port K of the second flow switch valve 21a and the fifth port O of the third flow switch valve 21b through the first high pressure pipe 67 connected to the refrigerant outlet 186.

As a result, the fifth port K of the second flow switch valve 21a and the fifth port O of the third flow switch valve 21b can be maintained at high pressure, so that the minimum operating differential pressure can be ensured between the fifth port K and the sixth port I, which is a low pressure port, and the minimum operating differential pressure can be ensured between the fifth port O and the sixth port M, which is a low pressure port. Thus, the second flow switch valve 21a and the third flow switch valve 21b can be normally operated in any environment.

For example, even in a case where the bypass expansion valve 18 is set to be in the open state but is then caused to be in the closed state due to a failure of the bypass expansion valve 18 while performing the simultaneous heating-defrosting operation, the predetermined amount of high-pressure refrigerant flows to the second flow switch valve 21a and the third flow switch valve 21b through the recess 187. As a result, the minimum operating differential pressure of the second flow switch valve 21a and that of the third flow switch valve 21b can be ensured, which enables switching of the second flow switch valve 21a and that of the third flow switch valve 21b as needed.

Even in a case where the bypass expansion valve 18 is fixed in the closed state due to a failure thereof when the heating operation is switched to the simultaneous heating-defrosting operation, the predetermined amount of high-pressure refrigerant flows to the second flow switch valve 21a and the third flow switch valve 21b through the recess 187. As a result, the minimum operating differential pressure of the second flow switch valve 21a and that of the third flow switch valve 21b can be ensured, which enables switching of the second flow switch valve 21a and that of the third flow switch valve 21b. Thereafter, since the bypass expansion valve 18 remains in the closed state even after switching of the second flow switch valve 21a and that of the third flow switch valve 21b, flow rate control cannot be performed in the simultaneous heating-defrosting operation, so that a malfunction is detected. In this case, switching of the second flow switch valve 21a and that of the third flow switch valve 21b have been normally performed, and thus it is easy to identify that a malfunction has occurred at the bypass expansion valve 18.

Note that, in Embodiment 3, the differential pressure ensuring process in Embodiment 1 or 2 may be performed or does not have to be performed. Moreover, flow paths at the bypass expansion valve 18 for ensuring a minimum operating differential pressure are not limited to paths formed by the recess 187. A modification of Embodiment 3 will be described below.

Fig. 19 is a cross-sectional view of a restriction portion of a bypass expansion valve 18 according to the modification of Embodiment 3. As illustrated in Fig. 19, a recess 187A may be formed not on the base 181 but on the tip portion 182a of the needle 182. The recess 187A is a recess formed by cutting away a portion of the tip portion 182a from the top end to the bottom end of the tip portion 182a. Even in this modification, even when the bypass expansion valve 18 is in the closed state, a flow path along which refrigerant flows is formed between the base 181 and the needle 182. As a result, even in a case where the bypass expansion valve 18 is in the closed state, a predetermined amount of high-pressure refrigerant can be caused to flow to the second flow switch valve 21a and the third flow switch valve 21b, and the minimum operating differential pressures can be ensured.

Fig. 20 is a cross-sectional view of a restriction portion of a bypass expansion valve 18 according to another modification of Embodiment 3. As illustrated in Fig. 20, protrusions 188 may be provided instead of the recess 187 on the slope portion 181a of the base 181. The tip portion 182a of the needle 182 may be provided with protrusions 188A. The protrusions 188 and the protrusions 188A are provided to be spaced apart from each other in the circumferential direction such that refrigerant flows. Note that, in Fig. 20, the base 181 is provided with the protrusions 188, and the needle 182 is provided with the protrusions 188A; however, it is sufficient that at least one of the base 181 and the needle 182 have the corresponding protrusions.

In a case where the protrusions 188 or the protrusions 188A are provided, the state in which the base 181 or the needle 182 abuts against the protrusions 188A or the protrusions 188 corresponds to the state in which the bypass expansion valve 18 is closed. In this case, gaps are also formed between the base 181 and the needle 182, and the gaps become flow paths and refrigerant flows along the flow paths. As a result, even in a case where the bypass expansion valve 18 is in the closed state, a predetermined amount of high-pressure refrigerant can be caused to flow to the second flow switch valve 21a and the third flow switch valve 21b, and the minimum operating differential pressures can be ensured. Note that the protrusions 188 or the protrusions 188A may be integrally formed with the base 181 or the needle 182, or another member such as a spacer may be disposed on the slope portion 181a of the base 181 or on the tip portion 182a of the needle 182 and treated as the protrusions 188 or the protrusions 188A.

Regarding the bypass expansion valve 18 according to Embodiment 3, the sizes of the recess 187 and 187A and those of the protrusions 188 and 188A may each be any size and the number of recess 187 and 187A and that of protrusions 188 and 188A may each be any number as long as the minimum operating differential pressures (for example, 0.1 Mpa to 0.2 Mpa) can be ensured, and these sizes and numbers are not limited to the examples illustrated in Figs. 16 to 20. For example, it is sufficient that the number of recess 187 and 187A and the number of protrusions 188 and 188A be greater than or equal to one. Note that in a case where the number of recess 187 and 187A and the number of protrusions 188 and 188A are too large or a case where the sizes of the recess 187 and 187A and the sizes of the protrusions 188 and 188A are too large, the bypass expansion valve 18 cannot be controlled at a Cv value, at which control of the bypass expansion valve 18 is desired.

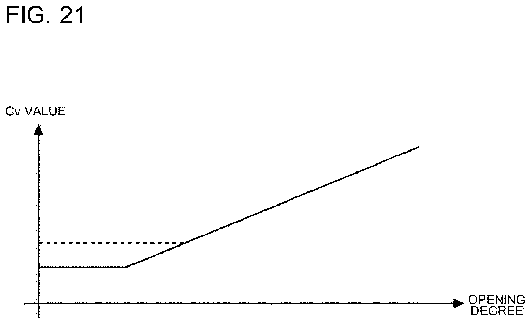

Fig. 21 is a graph illustrating a relationship between opening degree and Cv value for the bypass expansion valve 18. As illustrated in Fig. 21, in a case where the opening degree of the bypass expansion valve 18 is small, the Cv value remains constant. That is, in the case where the opening degree of the bypass expansion valve 18 is small, it is not possible to control the Cv value. Here, in a case where the bypass expansion valve 18 is provided with the recess 187 and 187A and the protrusions 188 and 188A and flow paths are formed, a range in which the Cv value cannot be controlled becomes wider as illustrated by a broken line in Fig. 21. Thus, the sizes of the recess 187 and 187A, the number of recess 187 and 187A, the sizes of the protrusions 188 and 188A, and the number of protrusions 188 and 188A are set to be in a range in which the minimum operating differential pressures can be ensured and the Cv value can be controlled.

The configuration of the bypass expansion valve 18 is not limited to that illustrated in Fig. 15, and the shapes of the main body 180, the base 181, and the needle 182 and the positions of the refrigerant inlet 185 and the refrigerant outlet 186, for example, may be changed.

Embodiments have been described above. The present disclosure is not limited to Embodiments described above and may be modified in various manners without departing from the gist of the present disclosure. For example, the refrigeration cycle apparatus 1 may perform either the differential pressure ensuring process of Embodiment 1 described above or the differential pressure ensuring process of Embodiment 2 described above only or may perform both the differential pressure ensuring processes. Moreover, the second flow switch valve 21a and the third flow switch valve 21b are not limited to four-way valves and may be other valves or combinations of valves such as three-way valves operated by differential pressure.

In the differential pressure ensuring processes according to Embodiments described above, the temperature difference between outdoor air temperature and heat exchanger temperature is used as an indicator of the operation frequency of the compressor 11; however, this does not have to be used. For example, the operation frequency of the compressor 11 is measured, and a case where the operation frequency of the compressor 11 instead of the temperature difference is less than or equal to a fifth threshold may be treated as the first condition. The fifth threshold is set in advance on the basis of, for example, the minimum operating differential pressures, the specifications of the compressor 11, and the use environment of the refrigeration cycle apparatus 1 and is stored in the memory of the controller 50.

In Embodiments described above, the configurations are used with which the pressures of the high pressure ports are increased by setting the opening degree of the bypass expansion valve 18 to the second degree, which is larger than the predetermined first degree, in a case where the first condition is met; however, what is performed with these configurations is not limited to this. Instead of or in addition to changing the opening degree of the bypass expansion valve 18, the operation frequency of the compressor 11 may be changed. Specifically, in step S103 of Fig. 11 and step S207 of Fig. 14, in a case where the first condition is not met, the operation frequency of the compressor 11 is set to a predetermined first frequency. In contrast, in a case where the first condition is met, the operation frequency of the compressor 11 is set to a second frequency, which is higher than the first frequency. Even in this case, the pressure of the high pressure port (the fifth port K) of the second flow switch valve 21a increases, and a pressure difference greater than or equal to the minimum operating differential pressure can be ensured between the high pressure port of the second flow switch valve 21a and the low pressure port (the sixth port I) of the second flow switch valve 21a.

Furthermore, in Embodiments described above or the modifications, in a case where the first condition is met, the opening degree of the bypass expansion valve 18 is uniformly set to the second degree; however, the opening degree is not limited to this. For example, in a case where the first condition corresponds to a case where the outdoor air temperature is lower than or equal to the first threshold, the opening degree of the bypass expansion valve 18 may be set in accordance with the outdoor air temperature. Specifically, in a case where the first threshold is set to 0 degrees C, the opening degree of the bypass expansion valve 18 may be set to the second degree when the outdoor air temperature is 0 degrees C to 15 degrees C, and the opening degree of the bypass expansion valve 18 may be set to a third opening degree, which is larger than the second degree, when the outdoor air temperature is -5 degrees C to -10 degrees C. Alternatively, a table or an equation in which a relationship between outdoor air temperature and the opening degree of the bypass expansion valve 18 is defined is stored in a memory or the like, and the opening degree of the bypass expansion valve 18 may be determined using the table or equation. Even in a case where the first condition corresponds to other examples, the opening degree of the bypass expansion valve 18 can be determined in a similar manner. Even in a case where the operation frequency of the compressor 11 is changed instead of the opening degree of the bypass expansion valve 18, the operation frequency of the compressor 11 is not necessarily uniformly set to the second frequency and can be set in accordance with, for example, the outdoor air temperature.

### Reference Signs List

1: refrigeration cycle apparatus, 10: refrigerant circuit, 11: compressor, 11a: suction port, 11b: discharge port, 12: first flow switch valve, 13: indoor heat exchanger, 14: expansion valve, 15a: first outdoor heat exchanger, 15b: second outdoor heat exchanger, 17a: capillary tube, 17b: capillary tube, 18: bypass expansion valve, 21a: second flow switch valve, 21b: third flow switch valve, 22: check valve, 50: controller, 61: discharge pipe, 62: suction pipe, 63, 65, 68, 69, 71, 84: bifurcation, 64: second high pressure pipe, 67, 67a, 67b: first high pressure pipe, 70, 70a, 70b: low pressure pipe, 80, 81, 82, 82a, 82b, 83a, 83b: refrigerant pipe, 91: outdoor air temperature sensor, 92a, 92b: heat exchanger temperature sensor, 100: valve body, 101: cylinder, 102: slide base, 103: slide valve, 104, 105: piston, 106: first space, 107: second space, 110, 111, 112, 113: pilot tube, 120: pilot solenoid valve, 180: main body, 181: base, 181a: slope portion, 182: needle, 182a: tip portion, 183: drive device, 184: valve chamber, 185: refrigerant inlet, 186: refrigerant outlet, 187, 187A: recess, 188, 188A: protrusion, 501: operation control unit, 502: condition determination unit, 503: differential pressure ensuring unit, 504: storage unit.

The present invention further comprises the following aspects:
[Aspect 1] A refrigeration cycle apparatus comprising:
   a first flow switch valve including a first port, a second port, a third port, and a fourth port;
   a second flow switch valve and a third flow switch valve each including a fifth port, a sixth port, and a seventh port, the second flow switch valve and the third flow switch valve operating by differential pressure;
   a compressor including a suction port configured to suck refrigerant and a discharge port configured to discharge the refrigerant;
   a discharge pipe connecting between the discharge port and the first port;
   a suction pipe connecting between the suction port and the second port;
   a first high pressure pipe connecting between the discharge pipe and the fifth port of the second flow switch valve and the fifth port of the third flow switch valve;
   a second high pressure pipe connecting between the third port and a bifurcation arranged at the first high pressure pipe;
   a bypass expansion valve provided at a part of the first high pressure pipe, the part extending between the discharge pipe and the bifurcation;
   a valve provided at the second high pressure pipe;
   a low pressure pipe connecting between the suction pipe and the sixth port of the second flow switch valve and the sixth port of the third flow switch valve;
   a first outdoor heat exchanger connected to the seventh port of the second flow switch valve;
   a second outdoor heat exchanger connected to the seventh port of the third flow switch valve;
   an indoor heat exchanger connected to the fourth port; and
   a controller configured to control operation frequency of the compressor and opening degree of the bypass expansion valve,
   wherein the controller is configured to perform a differential pressure ensuring process, when switching the second flow switch valve or the third flow switch valve,
   wherein, in the differential pressure ensuring process, the controller is configured to
   set the operation frequency of the compressor to a first frequency and set the opening degree of the bypass expansion valve to a first degree if a first condition is not met, and
   set the operation frequency of the compressor to a second frequency which is higher than the first frequency or set the opening degree of the bypass expansion valve to a second degree which is larger than the first degree if the first condition is met.
[Aspect 2] The refrigeration cycle apparatus of aspect 1, further comprising:
   an outdoor air temperature sensor configured to detect outdoor air temperature; and
   two heat exchanger temperature sensors configured to detect a temperature of the first outdoor heat exchanger and a temperature of the second outdoor heat exchanger respectively,
   wherein the first condition includes at least any of a case where the outdoor air temperature is lower than or equal to a first threshold, a case where a temperature difference between the outdoor air temperature and a heat exchanger temperature is lower than or equal to a second threshold, a case where the outdoor air temperature is higher than or equal to a third threshold, a case where the temperature difference between the outdoor air temperature and the heat exchanger temperature is lower than or equal to a fourth threshold, and a case where the operation frequency of the compressor is less than or equal to a fifth threshold,
   wherein the heat exchanger temperature is a temperature of the first outdoor heat exchanger, a temperature of the second outdoor heat exchanger, or an average value of the temperature of the first outdoor heat exchanger and the temperature of the second outdoor heat exchanger.
[Aspect 3] The refrigeration cycle apparatus of aspect 2, wherein
   the controller is configured to perform
   a heating operation in which the first outdoor heat exchanger and the second outdoor heat exchanger serve as an evaporator and the indoor heat exchanger serves as a condenser, and
   a simultaneous heating-defrosting operation in which either the first outdoor heat exchanger or the second outdoor heat exchanger serves as the evaporator, and the other one of the first outdoor heat exchanger and the second outdoor heat exchanger and the indoor heat exchanger serve as the condenser,
   wherein the controller performs the differential pressure ensuring process when switching from the heating operation to the simultaneous heating-defrosting operation.
[Aspect 4] The refrigeration cycle apparatus of aspect 3,
   wherein the controller is configured to determine that the first condition is met in a case where the outdoor air temperature is lower than or equal to the first threshold or a case where the temperature difference between the outdoor air temperature and the heat exchanger temperature is lower than or equal to the second threshold when switching from the heating operation to the simultaneous heating-defrosting operation.
[Aspect 5] The refrigeration cycle apparatus of aspect 3 or 4,
   wherein the simultaneous heating-defrosting operation includes a first operation in which the second outdoor heat exchanger serves as the evaporator and the first outdoor heat exchanger and the indoor heat exchanger serve as the condenser and a second operation in which the first outdoor heat exchanger serves as the evaporator and the second outdoor heat exchanger and the indoor heat exchanger serve as the condenser,
   wherein the controller is configured to perform the differential pressure ensuring process when switching from the first operation to the second operation.
[Aspect 6] The refrigeration cycle apparatus of aspect 5,
   wherein the controller is configured to determine that the first condition is met in a case where the outdoor air temperature is higher than or equal to the third threshold and the temperature difference between the outdoor air temperature and the heat exchanger temperature is lower than or equal to the fourth threshold when switching from the first operation to the second operation.
[Aspect 7] The refrigeration cycle apparatus of aspect 2,
   wherein the controller is configured to perform
   a simultaneous heating-defrosting operation including a first operation in which the second outdoor heat exchanger serves as an evaporator and the first outdoor heat exchanger and the indoor heat exchanger serve as a condenser and a second operation in which the first outdoor heat exchanger serves as the evaporator and the second outdoor heat exchanger and the indoor heat exchanger serve as the condenser,
   wherein the controller is configured to perform the differential pressure ensuring process when switching from the first operation to the second operation.
[Aspect 8] The refrigeration cycle apparatus of aspect 7,
   wherein the controller is configured to determine that the first condition is met in a case where the outdoor air temperature is higher than or equal to the third threshold and the temperature difference between the outdoor air temperature and the heat exchanger temperature is lower than or equal to the fourth threshold when switching from the first operation to the second operation.
[Aspect 9] The refrigeration cycle apparatus of any one of aspects 2 to 8,
   wherein the first threshold, the second threshold, the third threshold, the fourth threshold, and the fifth threshold are predetermined based on a minimum operating differential pressure of the second flow switch valve or the third flow switch valve.
[Aspect 10] A refrigeration cycle apparatus comprising:
   a first flow switch valve including a first port, a second port, a third port, and a fourth port;
   a second flow switch valve and a third flow switch valve each including a fifth port, a sixth port, and a seventh port, the second flow switch valve and the third flow switch valve operating by differential pressure;
   a compressor including a suction port for sucking refrigerant and a discharge port for discharging the refrigerant;
   a discharge pipe connecting between the discharge port and the first port;
   a suction pipe connecting between the suction port and the second port;
   a first high pressure pipe connecting between the discharge pipe and each of the fifth port of the second flow switch valve and the fifth port of the third flow switch valve;
   a second high pressure pipe connecting the third port and a bifurcation arranged at the first high pressure pipe;
   a bypass expansion valve provided at a part of the first high pressure pipe, the part extending between the discharge pipe and the bifurcation;
   a valve provided at the second high pressure pipe;
   a low pressure pipe connecting between the suction pipe and the sixth port of the second flow switch valve and the sixth port of the third flow switch valve;
   a first outdoor heat exchanger connected to the seventh port of the second flow switch valve;
   a second outdoor heat exchanger connected to the seventh port of the third flow switch valve; and
   an indoor heat exchanger connected to the fourth port,
   wherein
   the bypass expansion valve has a flow path allowing the refrigerant to flow therethrough even in a case where the bypass expansion valve is in a closed state.
[Aspect 11] The refrigeration cycle apparatus of aspect 10, wherein
   the bypass expansion valve includes
      a base in which a refrigerant outlet is formed, and
      a needle that moves in a direction toward the base and a direction away from the base and changes opening degree of the refrigerant outlet, and
   the flow path is formed between the needle and the base.
[Aspect 12] The refrigeration cycle apparatus of aspect 11,
   wherein at least either one of the base and the needle has a recess or a protrusion with which the flow path is formed.
[Aspect 13] The refrigeration cycle apparatus of aspect 11 or 12,
   wherein the closed state is a state in which the base abuts against at least a portion of the needle.

## Claims

1. A refrigeration cycle apparatus comprising:
a first flow switch valve (12) including a first port (G), a second port (E), a third port (F), and a fourth port (H);
a second flow switch valve (21a) and a third flow switch valve (21b) each including a fifth port (K,O), a sixth port (I, M), and a seventh port (L,P), the second flow switch valve (21a) and the third flow switch valve (21b) operating by differential pressure;
a compressor (11) including a suction port (11a) for sucking refrigerant and a discharge port (11b) for discharging the refrigerant;
a discharge pipe (61) connecting between the discharge port (11b) and the first port (G);
a suction pipe (62) connecting between the suction port (11a) and the second port (E);
a first high pressure pipe (67) connecting between the discharge pipe (61) and each of the fifth port (K) of the second flow switch valve (21a) and the fifth port (O) of the third flow switch valve (21b);
a second high pressure pipe (64) connecting the third port (F) and a bifurcation (65) arranged at the first high pressure pipe (67);
a bypass expansion valve (18) provided at a part of the first high pressure pipe (67), the part extending between the discharge pipe (61) and the bifurcation (65);
a valve (22) provided at the second high pressure pipe (64);
a low pressure pipe (70) connecting between the suction pipe (62) and each of the sixth port (L) of the second flow switch valve (21a) and the sixth port (P) of the third flow switch valve (21b);
a first outdoor heat exchanger (15a) connected to the seventh port (L) of the second flow switch valve (21a);
a second outdoor heat exchanger (15b) connected to the seventh port (P) of the third flow switch valve (21b); and
an indoor heat exchanger (13) connected to the fourth port (H),
wherein
the bypass expansion valve (18) includes
a base (181) in which a refrigerant outlet is formed, and
a needle (182) that moves in a direction toward the base (181) and a direction away from the base (181) and changes opening degree of the refrigerant outlet, and
the flow path is formed between the needle (182) and the base (181),
the path allows the refrigerant to flow therethrough even in a case where the bypass expansion valve (18) is in a closed state, and
the closed state is a state in which the base (181) abuts against at least a portion of the needle (182).

2. The refrigeration cycle apparatus of claim 1,
wherein at least either one of the base (181) and the needle (182) has a recess (187) or a protrusion (188) with which the flow path is formed.
